# EUROPEAN PATENT APPLICATION

(11) **EP 4 647 912 A2**
(43) Date of publication of application: **12.11.2025**
(21) Application number: 25204341.9
(22) Date of filing: 24.09.2025
(51) Int. Cl.: G06F 9/48

(54) **COMPUTING APPARATUS, COMPUTING METHOD, COMPUTING SYSTEM, CHIP, DEVICE, AND MEDIUM**

(30) Priority: 24.06.2025 CN 202510857502
(71) Applicant: Beijing Horizon Information Technology Co., Ltd., Beijing 100094 (CN)
(72) Inventor: DING, Jinnan, 100094 Beijing (CN)
(74) Representative: v. Bezold & Partner Patentanwälte - PartG mbB

(57) **Abstract**

This disclosure provides a computing apparatus, system, and method, a chip, a device, and a medium. The computing apparatus includes a reading circuit, a computing circuit, a storage circuit, a control circuit, and a plurality of first registers. At least one first register is configured with task configuration information of tasks. The control circuit reads register information respectively corresponding to the tasks one by one in a preset manner; enables the first register identified by a currently read piece of register information to output first configuration information to the reading circuit, second configuration information to the computing circuit, and third configuration information to the storage circuit; controls the reading circuits, the computing circuit, and the storage circuit to perform data reading, data operations, and data storage in a time-sharing manner based on the first configuration information, the second configuration information, and the third configuration information of the tasks.

## Description

### TECHNICAL FIELD

This disclosure relates to integrated circuit technologies and computer technologies, and in particular, to a computing apparatus, a computing method, a computing system, a chip, a device, and a medium.

### BACKGROUND

In the field of integrated circuits, such as chips with neural network acceleration processing functions, there are a large amount of computing tasks involved, such as tensor computation and vector computation. A processing flow of each computing task usually includes the following four steps: register configuration, data reading, data computing, and storage of a computing result.

In related technologies, during processing of each computing task, a corresponding circuit in a computing apparatus executes the foregoing four steps sequentially. Because there are usually a large amount of computing tasks involved in the computing apparatus, the computing apparatus executes different computing tasks sequentially. For each computing task, the foregoing four steps need to be executed sequentially, and a next computing task can be executed merely after one task is completed. During this process, circuits of the computing apparatus are idle for a lot of time, result in a large amount of idle and wasted computing resources, which limits overall resource utilization and computational efficiency of the computing apparatus.

### SUMMARY

To resolve the foregoing technical problem, embodiments of this disclosure provide a computing apparatus, system, and method, a chip, a device, and a medium, to improve resource utilization and computational efficiency of the computing apparatus.

According to an aspect of this disclosure, a computing apparatus is provided, including a reading circuit, a computing circuit, a storage circuit, a control circuit, and a plurality of first registers, where
at least one first register among the plurality of first registers is configured with task configuration information of tasks, and the task configuration information includes first configuration information for reading source data, second configuration information for characterizing an operation type, and third configuration information for storing destination data; and
the control circuit is configured to:
   read register information respectively corresponding to the tasks one by one in a preset manner, where the register information is used to uniquely identify one first register; enable the first register identified by a currently read piece of register information to output the first configuration information to the reading circuit; enable the first register identified by the currently read piece of register information to output the second configuration information to the computing circuit; and enable the first register identified by the currently read piece of register information to output the third configuration information to the storage circuit; and
   control the reading circuit to perform data reading in a time-sharing manner based on the first configuration information of the tasks; control the computing circuit to perform data operations in a time-sharing manner based on the second configuration information of the tasks; and control the storage circuit to perform data storage in a time-sharing manner based on the third configuration information of the tasks.

According to another aspect of this disclosure, a chip is provided, including the computing apparatus according to any one of embodiments of this disclosure.

According to still another aspect of this disclosure, a computing system is provided, including a processor and the computing apparatus according to any one of embodiments of this disclosure, where the processor is electrically connected to the computing apparatus through a bus; and
the processor is configured to send configuration instructions corresponding to tasks to the computing apparatus.

According to yet another aspect of this disclosure, a computing method is provided, including:
reading register information corresponding to tasks one by one in a preset manner, where the register information is used to uniquely identify one first register of a plurality of first registers; at least one first register among the plurality of first registers is configured with task configuration information of the tasks, and the task configuration information includes first configuration information for reading source data, second configuration information for characterizing an operation type, and third configuration information for storing destination data;
enabling the first register identified by a currently read piece of register information to output the first configuration information to the reading circuit; enabling the first register identified by the currently read piece of register information to output the second configuration information to the computing circuit; and enabling the first register identified by the currently read piece of register information to output the third configuration information to the storage circuit; and
controlling the reading circuit to perform data reading in a time-sharing manner based on the first configuration information of the tasks; controlling the computing circuit to perform data operations based on the second configuration information of the tasks; and controlling the storage circuit to perform data storage in a time-sharing manner based on the third configuration information of the tasks.

According to still yet another aspect of an embodiment of this disclosure, an electronic device is provided, including:
a processor; and
a memory, configured to store processor-executable instructions, where
the processor is configured to read the executable instructions from the memory, and execute the instructions to implement the computing method according to any one of the foregoing embodiments.

According to a further aspect of an embodiment of this disclosure, a computer readable storage medium is provided. The storage medium stores a computer program, and when executed by a processor, the computer program is configured to implement the computing method according to any one of the foregoing embodiments of this disclosure.

According to a still further aspect of an embodiment of this disclosure, a computer program product is provided. When instructions in the computer program product are executed by a processor, the computing method according to any one of the foregoing embodiments is implemented.

According to the embodiments of this disclosure, a novel computing apparatus and computing method are provided. The task configuration information (including the first configuration information for reading the source data, the second configuration information for charactering the operation type, and the third configuration information for storing the destination data) of at least one task that needs to be executed may be configured for at least one first register among the plurality of first registers, correspondingly. The register information respectively corresponding to the tasks is read one by one in the preset manner. The first register identified by the currently read piece of register information is enabled to output the first configuration information to the reading circuit; the first register identified by the currently read piece of register information is enabled to output the second configuration information to the computing circuit; and the first register identified by the currently read piece of register information is enabled to output the third configuration information to the storage circuit. Subsequently, the reading circuit is controlled to perform data reading in a time-sharing manner based on the first configuration information of the tasks; the computing circuit is controlled to perform data operations in a time-sharing manner based on the second configuration information of the tasks; and the storage circuit is controlled to perform data storage in a time-sharing manner based on the third configuration information of the tasks. Thus, time-sharing processing for different tasks is implemented at various task processing stages (including configuration, data reading, data operations, and data storage). Configuration of a next task may be performed immediately after configuration of one task is completed; data reading of a next task may be performed immediately after data reading of one task is completed; data operations of a next task may be performed immediately after data operations of one task are completed; and data storage of a next task may be performed immediately after data storage of one task is completed. In this case, time-sharing multiplexing of configuration resources, data reading resources, data operation resources, and data storage resources is achieved. Thus, seamless scheduling of different tasks is implemented at various task processing stages, which can significantly reduce idle time of the configuration resources, the data reading resources, the data operation resources, and the data storage resources, thereby improving utilization of the configuration resources, the data reading resources, the data operation resources, and the data storage resources, and improving overall resource utilization and computational efficiency of the computing apparatus.

### BRIEF DESCRIPTION OF DRAWINGS

FIG. 1 is a schematic sequence diagram of serial execution of two computing tasks in related technologies;
FIG. 2 is a diagram of a structure of an exemplary circuit to which this disclosure is applicable;
FIG. 3 is a schematic flowchart of a computing method according to an exemplary embodiment of this disclosure;
FIG. 4 is a schematic flowchart of a computing method according to another exemplary embodiment of this disclosure;
FIG. 5 is a schematic flowchart of a computing method according to still another exemplary embodiment of this disclosure;
FIG. 6 is a schematic sequence diagram of parallel execution of two computing tasks according to an exemplary embodiment of this disclosure;
FIG. 7 is a schematic diagram of a structure of a computing apparatus according to an exemplary embodiment of this disclosure;
FIG. 8 is a schematic diagram of a structure of a computing apparatus according to another exemplary embodiment of this disclosure;
FIG. 9 is a schematic diagram of a structure of a first register according to an exemplary embodiment of this disclosure;
FIG. 10 is a schematic diagram of a structure of a computing apparatus according to still another exemplary embodiment of this disclosure;
FIG. 11 is a schematic diagram of a structure of a first register according to another exemplary embodiment of this disclosure;
FIG. 12 is a schematic diagram of a structure of a computing apparatus according to yet another exemplary embodiment of this disclosure;
FIG. 13 is a schematic diagram of a structure of two operation paths included in a computing circuit according to an exemplary embodiment of this disclosure;
FIG. 14 is a schematic diagram of a structure of a computing apparatus according to still yet another exemplary embodiment of this disclosure;
FIG. 15 is a schematic diagram of a structure of a computing apparatus according to a further exemplary embodiment of this disclosure;
FIG. 16 is a schematic sequence diagram according to an application embodiment of this disclosure;
FIG. 17 is a schematic diagram of a structure of a computing system according to an exemplary embodiment of this disclosure; and
FIG. 18 is a diagram of a structure of an electronic device according to an exemplary embodiment of this disclosure.

### DETAILED DESCRIPTION OF THE EMBODIMENTS

To explain this disclosure, exemplary embodiments of this disclosure are described below in detail with reference to accompanying drawings. Obviously, the embodiments described are merely some, rather than all of embodiments of this disclosure. It should be understood that this disclosure is not limited to the exemplary embodiments.

It should be noted that unless otherwise specified, the scope of this disclosure is not limited by relative arrangement, numeric expressions, and numerical values of components and steps described in these embodiments.

It should be further understood that, the descriptions of the various embodiments of this disclosure focus on differences among the various embodiments. The same or similar parts among the embodiments may refer to one another. For concision, description is not repeated.

### Overview of this disclosure

In a process of implementing this disclosure, the inventor finds through research that in related technologies, during processing of each computing task, a corresponding circuit in a computing apparatus executes the following four steps sequentially: register configuration, data reading, data computing, and storage of a computing result, which form a continuous data processing flow. The corresponding circuit in the computing apparatus processes a batch of data in each operation period. As each computing task may involve a plurality batches of data, the stages of data reading, data computing, and storage of the computing result may overlap in processing time.

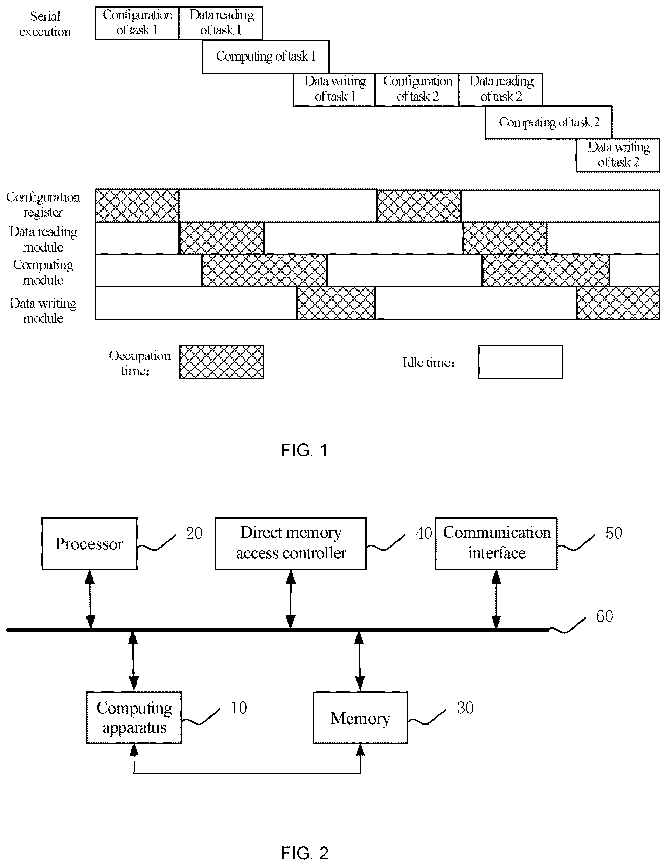

Because there are a large amount of computing tasks involved in the computing apparatus, the computing apparatus executes different computing tasks sequentially. A next computing task can be executed merely after one computing task is executed, and each computing task performs the foregoing four steps sequentially. During this process, circuits of the computing apparatus are idle for a lot of time. FIG. 1 is a schematic sequence diagram of serial execution of two computing tasks (represented as a task 1 and a task 2) in related technologies. It may be learned from FIG. 1 that circuits that implements register configuration (configuration for short), data reading (data reading for short), data computing (computing for short), and storage of the computing result (data writing for short) are idle for a lot of time, resulting in a large amount of idle and wasted computing resources. This limits overall resource utilization and computational efficiency of the computing apparatus, resulting in lower computational efficiency.

### Exemplary circuit

Embodiments of this disclosure may be applied to any device, for example, to an autonomous mobile device (also referred to as an intelligent agent) such as a vehicle, a robot, or a drone; or to an electronic device such as a mobile terminal, a PC, a tablet, or a wearable device (such as AR glasses or a smartwatch). Specifically, the computing apparatus provided in the embodiments of this disclosure may be applied as an acceleration circuit to a computing system in any device. The computing system may be, for example, a system on chip (SOC) or another form of task processing system, which performs computing processing on tasks. Specific application objects and implementation forms are not limited in the embodiments of this disclosure.

FIG. 2 is a diagram of a structure of an exemplary circuit to which this disclosure is applicable. As shown in FIG. 2, a circuit structure adopted in this embodiment includes a computing apparatus 10, a processor 20, a memory 30, a direct memory access controller (DMAC) 40, and a communication interface 50. The processor 20, the memory 30, the direct memory access controller 40, and the communication interface 50 may be electrically connected to each other through a bus 60 for communication. The computing apparatus 10, the processor 20, the direct memory access controller 40, and the communication interface 50 may be electrically connected to each other through the bus 60 for communication. The computing apparatus 10 may be used as an acceleration circuit to accelerate a computing tasks, such as accelerating tensor computation in an AI application, to improve computational performance. In some implementations, the computing apparatus 10 may be embodied as a processing unit, a graphics processing unit (GPU), an application specific integrated circuit (ASIC), or a field programmable gate array (FPGA) that is specifically designed for tensor operations. The processor 20 is configured to schedule the computing apparatus 10, and allocate to-be-executed instructions, such as configuration instructions corresponding to tasks, to the computing apparatus 10. The processor 20 may be, for example, a central processing unit (CPU for short), an application specific integrated circuit (ASIC), or a field programmable gate array (FPGA). The memory 30 may be a static random access memory (SRAM). The direct memory access controller 40 may transfer data in a double data rate (DDR) synchronous dynamic random access memory or a flash (flash EEPROM memory) to the static random access memory 30 for reading and storage by the computing apparatus 10. The computing apparatus 10 and the processor 20 may be coupled to the memory 30, so as to read data from the memory 30 or write data into the memory 30. The computing apparatus 10 may read source data from the static random access memory 30, perform data operations on the read source data, and store destination data obtained through the data operations into the static random access memory 30. The communication interface 50 may be electrically connected to a storage device, a display device, an audio device, a keyboards, a mouse, and other input/output devices. The storage device may be a device used for information storage that is coupled to the bus 60 through the communication interface 50, such as a hard disk, an optical disc, or a flash memory. The display device may be coupled to the bus 60 through a corresponding graphics card, for displaying based on a display signal provided by the bus 60.

The computing apparatus 10 may include a configuration circuit, a reading circuit, a computing circuit, a storage circuit, a control circuit, and a plurality of first registers. Based on the circuit structure shown in FIG. 2, the processor 20 may send configuration instructions for computing tasks to the computing apparatus 10, wherein the configuration instructions include task configuration information of the computing tasks. The task configuration information may include, for example, first configuration information for reading the source data, second configuration information for characterizing an operation type, and third configuration information for storing the destination data. For the computing tasks, the configuration circuit in the computing apparatus 10 selects an available first register to configure the task configuration information of the computing tasks, and synchronously configures, in a register information queue of the control circuit, register information of the first registers corresponding to the computing tasks. The control circuit reads the register information corresponding to the computing tasks one by one in a preset manner; enables the first register identified by a currently read piece of register information to output the first configuration information to the reading circuit; enables the first register identified by the currently read piece of register information to output the second configuration information to the computing circuit; enables the first register identified by the currently read piece of register information to output the third configuration information to the storage circuit; controls the reading circuit to read data from the memory 30 in a time-sharing manner based on the first configuration information of the computing tasks; controls the computing circuit to perform data operations in a time-sharing manner based on the second configuration information of the computing tasks; and controls the storage circuit to store computing result data into the memory 30 in a time-sharing manner based on the third configuration information of the computing tasks.

Thus, time-sharing processing for different tasks is implemented at various task processing stages (including task configuration, data reading, data operations, and data storage). Configuration of a next task may be performed immediately after configuration of one task is completed; data reading of a next task may be performed immediately after data reading of one task is completed; data operations of a next task may be performed immediately after data operations of one task are completed; and data storage of a next task may be performed immediately after data storage of one task is completed. In this case, time-sharing multiplexing of configuration resources, data reading resources, data operation resources, and data storage resources is achieved. Thus, seamless scheduling of different tasks is implemented at various task processing stages, which can significantly reduce idle time of the configuration resources, the data reading resources, the data operation resources, and the data storage resources, thereby improving utilization of the configuration resources, the data reading resources, the data operation resources, and the data storage resources, and improving overall resource utilization and computational efficiency of the computing apparatus.

### Exemplary Method

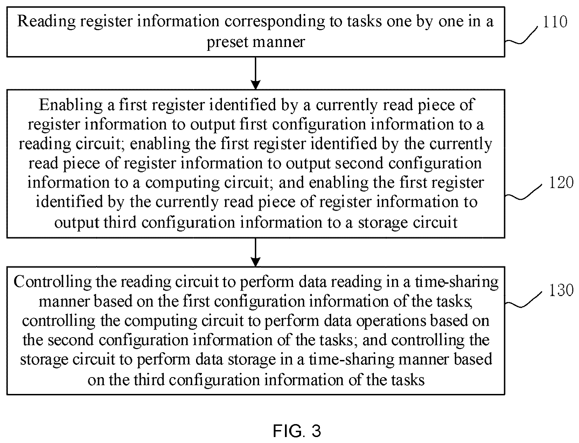

FIG. 3 is a schematic flowchart of a computing method according to an exemplary embodiment of this disclosure. The computing method in this embodiment of this disclosure may be applied to any device, for example, to an autonomous mobile device (also referred to as an intelligent agent) such as a vehicle, a robot, or a drone; or to an electronic device such as a mobile terminal, a PC, a tablet, or a wearable device (such as AR glasses or a smartwatch). Specifically, the computing method in this embodiment of this disclosure may be implemented by using a computing apparatus in any device. As shown in FIG. 3, the computing method in an embodiment includes the following operations.

110: Reading register information corresponding to tasks one by one in a preset manner, that is, reading the register information corresponding to one task each time.

The register information is used to uniquely identify one first register of a plurality of first registers. In an implementation example, the register information may include, for example, at least one of a register identifier (ID), a register name, and a register number.

At least one first register among the plurality of first registers is configured with task configuration information of the tasks. For example, each first register is configured with the task configuration information of one task each time, and different first registers are configured with the task configuration information of different tasks. In operation 110, the first register identified by read register information refers to a first register in the at least one first register, that is, a first register configured with the task configuration information. The task configuration information of the tasks may include but is not limited to at least one piece of the following information: first configuration information for reading source data, second configuration information for characterizing an operation type, and third configuration information for storing destination data.

The first configuration information is used to determine a storage address of the corresponding source data in a storage space, while the third configuration information is used to determine a storage address of the corresponding destination data in the storage space. The second configuration information may be description information about the operation type, an operation code used to characterize an operation executed by the operation type, or an operation type identifier (ID). The operation type identifier is used to uniquely identify one operation type. The operation type refers to a type of data processing, that is, indicates which type of processing is performed on data. For example, the operation type may include but is not limited to any one or a combination of addition, subtraction, multiplication, division, comparison, quantization, dequantization, logical operation, table lookup, convolution, pooling, data migration, compression, decompression, encryption and decryption, finding a maximum value, finding a minimum value, summation, and logical operation. Supported operation types are not limited in this embodiment of this disclosure.

In this embodiment of this disclosure, any general or customized configuration manner may be adopted to configure the task configuration information of the tasks for the first registers. For example, in some implementations, to configure the task configuration information for the first registers, a processor (such as a CPU) sends configuration instructions including the task configuration information of the corresponding tasks to the computing apparatus, and the computing apparatus configures the task configuration information of the corresponding tasks for the first registers based on the configuration instructions corresponding to the tasks. For example, the computing apparatus may sequentially configure the task configuration information corresponding to a task for first registers in an available status (or referred to as an idle status) based on status information of the first registers and the configuration instructions corresponding to the tasks. The status information of the first register is used to indicate whether the first register is in the available status (or referred to as the idle status) or an unavailable status (or referred to as a busy status). After the task configuration information corresponding to a task is configured to the first register, the status information of the first register changes from the available status to the unavailable status. After the corresponding tasks (that is, configuration of the task configuration information, data reading, data operations, and data storage) are executed, the status information of the first register changes from the unavailable status to the available status, so that the first register is configured with the task configuration information corresponding to a next task.

For another example, in some other implementations, to configure the task configuration information for the first registers, a processor (such as a CPU) may execute configuration instructions corresponding to the tasks, and configure the task configuration information of the tasks into a memory; and the computing apparatus may read the task configuration information of the tasks from the memory, and configure the same to the first registers in the available status, respectively. The configuration instructions include the task configuration information and configuration addresses of the corresponding tasks. For example, in a specific implementation, the computing apparatus may read the task configuration information of a task from the memory based on the status information of the first registers when a certain first register is in the available status, so as to configure the task configuration information for that first register, and change the status information of that first register from the available status to the unavailable status. After reading the task configuration information of a task from the memory, the computing apparatus may delete the read task configuration information from the memory, so as to avoid duplicate reading of the task configuration information. Alternatively, after reading the task configuration information of a task from the memory, the computing apparatus may also set the task configuration information of that task to a processed status, so that the processor writes task configuration information of a new task into a storage address of the task configuration information of that task.

As the task configuration information of different tasks may be configured in different first registers, the task configuration information of a next task may be configured immediately after the task configuration information of a task is configured, without waiting for completion of a task (that is, data reading, data operations, and data storage are all executed) before configuring the task configuration information of the next task. In this way, time-sharing configuration of the task configuration information for different tasks is implemented, so that different task configurations may be performed in a streaming manner.

Based on operation 110, a piece of register information corresponding to one task may be read each time, and the corresponding first register may be determined based on this register information. The register information read each time is used as a currently read piece of register information to execute operation 120.

120: Enabling a first register identified by a currently read piece of register information to output first configuration information to a reading circuit; enabling the first register identified by the currently read piece of register information to output second configuration information to a computing circuit; and enabling the first register identified by the currently read piece of register information to output third configuration information to a storage circuit.

Based on operation 120, the first register identified by the register information read each time may output the first configuration information to the reading circuit, output the second configuration information to the computing circuit, and output the third configuration information to the storage circuit.

130: Controlling the reading circuit to perform data reading in a time-sharing manner based on the first configuration information of the tasks; controlling the computing circuit to perform data operations based on the second configuration information of the tasks; and controlling the storage circuit to perform data storage in a time-sharing manner based on the third configuration information of the tasks.

In operation 130, based on the first configuration information of any task, the reading circuit may determine a storage address of source data corresponding to that task in the storage space, and read the corresponding source data from the storage address. Based on the operation type indicated by the second configuration information of any task, the computing circuit may perform an operation of that operation type on the source data of that task that is read by the reading circuit, to obtain the destination data. Based on the third configuration information of any task, the storage circuit may determine a storage address of the destination data corresponding to that task in the storage space, and store the destination data of that task that is obtained through operations by the computing circuit into the storage address.

The first register identified by the register information read each time may output the first configuration information to the reading circuit, output the second configuration information to the computing circuit, and output the third configuration information to the storage circuit. Therefore, based on operation 130, the reading circuit may be controlled to sequentially perform data reading based on the first configuration information of the tasks, to implement time-sharing data reading for different tasks, so that data reading for different tasks may be performed in a streaming manner; the computing circuit may be controlled to sequentially perform data operations based on the second configuration information of the tasks, to implement time-sharing data operations for different tasks, so that data operations for different tasks may be performed in a streaming manner; and the storage circuit may be controlled to sequentially perform data storage based on the third configuration information of the tasks, to implement time-sharing data storage for different tasks, so that data storage for different tasks may be performed in a streaming manner.

According to this embodiment, time-sharing processing for different tasks is implemented at various task processing stages (including task configuration, data reading, data operations, and data storage). Configuration of a next task may be performed immediately after configuration of one task is completed; data reading of a next task may be performed immediately after data reading of one task is completed; data operations of a next task may be performed immediately after data operations of one task are completed; and data storage of a next task may be performed immediately after data storage of one task is completed. In this case, time-sharing multiplexing of configuration resources, data reading resources, data operation resources, and data storage resources is achieved. Thus, seamless scheduling of different tasks is implemented at various task processing stages, which can significantly reduce idle time of the configuration resources, the data reading resources, the data operation resources, and the data storage resources, thereby improving utilization of the configuration resources, the data reading resources, the data operation resources, and the data storage resources, and improving overall resource utilization and computational efficiency of the computing apparatus.

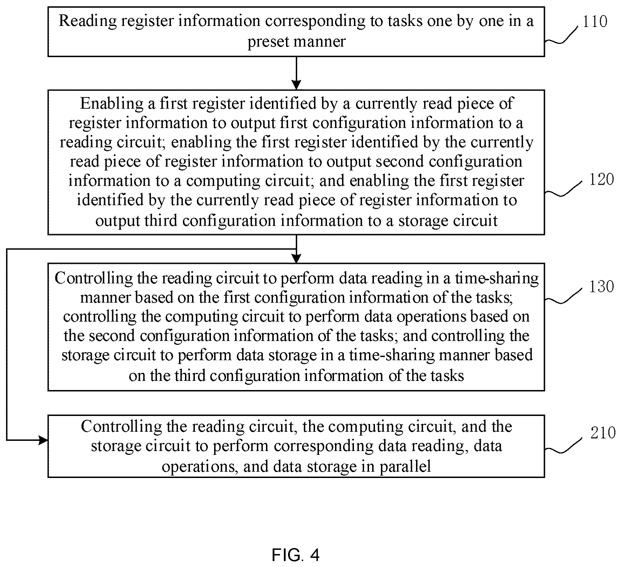

FIG. 4 is a schematic flowchart of a computing method according to another exemplary embodiment of this disclosure. As shown in FIG. 4, on the basis of the embodiment shown in FIG. 3, the computing method in this embodiment may further include:

210: Controlling the reading circuit, the computing circuit, and the storage circuit to perform corresponding data reading, data operations, and data storage in parallel.

The first register identified by the register information read each time may output the first configuration information to the reading circuit, output the second configuration information to the computing circuit, and output the third configuration information to the storage circuit. Therefore, based on operation 210, the reading circuit, the computing circuit, and the storage circuit may be controlled to perform corresponding data reading, data operations, and data storage in parallel. Moreover, different task configurations may also be performed in a streaming manner, so that task processing may be performed in parallel at different task processing stages (that is, task configuration, data reading, data operations, and data storage). Thus, overall computational efficiency is further improved.

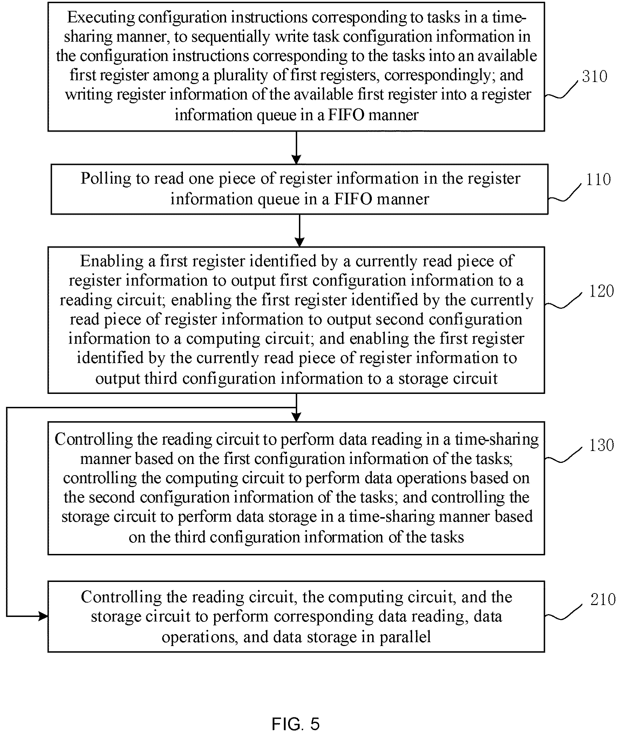

FIG. 5 is a schematic flowchart of a computing method according to still another exemplary embodiment of this disclosure. As shown in FIG. 5, on the basis of any one of the embodiments shown in FIG. 3 and FIG. 4, the computing method in this embodiment may further include:

310: Executing configuration instructions corresponding to the tasks in a time-sharing manner, to sequentially write the task configuration information in the configuration instructions corresponding to the tasks into one available first register among the plurality of first registers, correspondingly; and writing the register information of the available register into a register information queue in a first-in-first-out (FIFO) manner.

In this embodiment of this disclosure, the available register refers to a first register among the plurality of first registers that is in the available status (or referred to as the idle status).

In this embodiment of this disclosure, the register information queue is used to cache the register information respectively corresponding to the tasks in a FIFO manner.

Based on operation 310, synchronous configuration for the task configuration information of the first register and the register information of the first register in the register information queue may be implemented for any task.

Correspondingly, in this embodiment, operation 110 may include 1102: polling to read one piece of register information in the register information queue in a FIFO manner.

According to this embodiment, when sequentially configuring the task configuration information of the tasks to a first register, the register information of this first register is written into the register information queue in a FIFO manner, thereby implementing synchronous configuration for the task configuration information of the task and the register information of the first register configured with the task configuration information of that task. In this way, when polling to read the register information in the register information queue in a FIFO manner and performing a subsequent process, the tasks may be processed sequentially in a streaming manner.

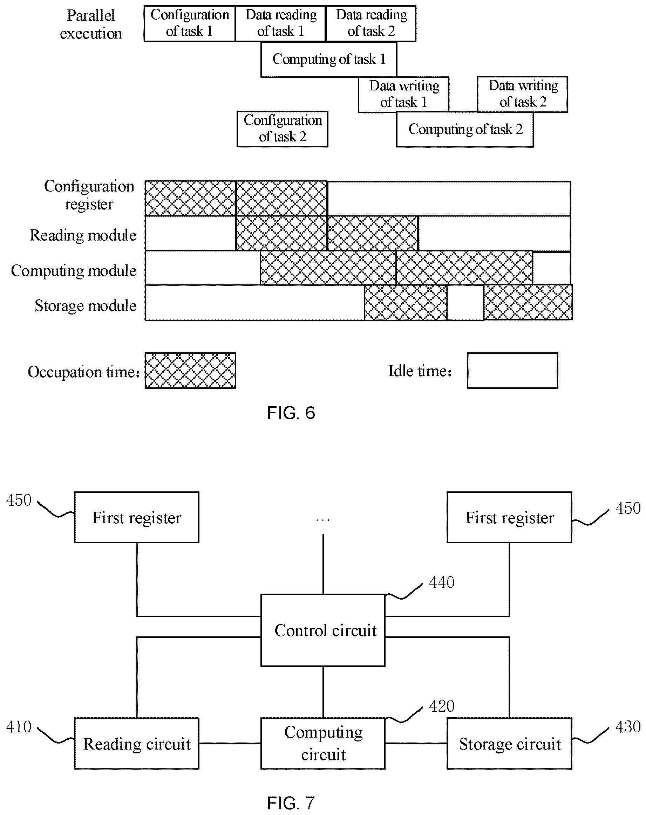

FIG. 6 is a schematic sequence diagram of parallel execution of two computing tasks according to an exemplary embodiment of this disclosure. Still taking processing of two computing tasks (represented as a task 1 and a task 2) as an example, based on the foregoing embodiments of this disclosure, configuration for the task 2 may be performed immediately after the task 1 is configured, data reading for the task 2 may be performed immediately after data reading for the task 1 is completed, a data operation for the task 2 may be performed immediately after a data operation for the task 1 is completed, and data storage for the task 2 may be performed immediately after data storage for the task 1 is completed and computing result data (that is, the destination data) has been generated by the task 2. The task 1 and the task 2 execute task configuration (that is, configuration of the task configuration information), data reading, data operations, and data storage in parallel, respectively. It may be learned from FIG. 6 that according to the embodiments of this disclosure, seamless scheduling of the task 1 and the task 2 is implemented at various task processing stages. Compared to the related technology shown in FIG. 1, the idle time of the configuration resources, the data reading resources, the data operation resources, and the data storage resources is significantly reduced, the utilization of the configuration resources, the data reading resources, the data operation resources, and the data storage resources is improved, and thus the overall resource utilization and the computational efficiency of the computing apparatus are improved.

Hereinafter, the computing method in the embodiments of this disclosure may be implemented by using, but is not limited to, the computing apparatus in the embodiments of this disclosure. Hereinafter, the computing method in the embodiments of this disclosure may be further described in combination with the computing apparatus in the embodiments of this disclosure. The content of the computing apparatus and the computing method in the embodiments of this disclosure may be combined and referenced with each other, or may be combined in any form. To reduce redundancy, repeated description is not made.

It should be noted that, in addition to the structure of the computing apparatus in the embodiments of this disclosure, the computing method in the embodiments of this disclosure may also be implemented through other circuit structures. A specific circuit structure for implementing the computing method is not limited in the embodiments of this disclosure.

### Exemplary Apparatus

FIG. 7 is a schematic diagram of a structure of a computing apparatus according to an exemplary embodiment of this disclosure. The computing apparatus in this embodiment of this disclosure may be used as an acceleration circuit for implementing a computing method in any embodiment of this disclosure. This embodiment of this disclosure may be applied to any device, for example, to an autonomous mobile device (also referred to as an intelligent agent) such as a vehicle, a robot, or a drone; or to an electronic device such as a mobile terminal, a PC, a tablet, or a wearable device (such as AR glasses or a smartwatch). As shown in FIG. 7, the computing apparatus provided in an exemplary embodiment of this disclosure includes a reading circuit 410, a computing circuit 420, a storage circuit 430, a control circuit 440, and a plurality of first registers 450. The control circuit 440 is electrically connected to the first registers 450, the reading circuit 410, the computing circuit 420, and the storage circuit 430, respectively. The reading circuit 410 is electrically connected to the computing circuit 420, which is electrically connected to the storage circuit 430.

At least one first register among the plurality of first registers 450 is configured with task configuration information of tasks. For example, each first register 450 is configured with the task configuration information of one task each time, and different first registers 450 are configured with the task configuration information of different tasks. The task configuration information includes first configuration information for reading source data, second configuration information for characterizing an operation type, and third configuration information for storing destination data.

The first configuration information is used to determine a storage address of the corresponding source data in a storage space, while the third configuration information is used to determine a storage address of the corresponding destination data in the storage space. The operation type refers to a type of data processing, that is, indicates which type of processing is performed on data. For example, the operation type may include but is not limited to any one or a combination of addition, subtraction, multiplication, division, comparison, quantization, dequantization, logical operation, table lookup, convolution, pooling, data migration, compression, decompression, encryption and decryption, finding a maximum value, finding a minimum value, summation, and logical operation. Supported operation types are not limited in this embodiment of this disclosure. The second configuration information may be description information about the operation type, an operation code used to characterize an operation executed by the operation type, or an operation type identifier (ID). The operation type identifier is used to uniquely identify one operation type.

In this embodiment of this disclosure, any general or customized configuration manner may be adopted to configure the task configuration information of the tasks for the first registers. For example, in some implementations, a processor (such as a CPU) sends configuration instructions including the task configuration information of the corresponding tasks to the computing apparatus, and the computing apparatus configures the task configuration information of the corresponding tasks for the first registers 450 based on the configuration instructions corresponding to the tasks. For example, the computing apparatus may sequentially configure the task configuration information corresponding to a task for first registers 450 in an available status (or referred to as an idle status) based on status information of the first registers 450 and the configuration instructions corresponding to the tasks. The status information of the first register 450 is used to indicate whether the first register is in the available status (or referred to as the idle status) or an unavailable status (or referred to as a busy status). After the task configuration information corresponding to one task is configured to the first register 450, the status information of the first register changes from the available status to the unavailable status. After the corresponding tasks (that is, configuration of the task configuration information, data reading, data operations, and data storage) are executed, the status information of the first register 450 changes from the unavailable status to the available status, so that the first register is configured with the task configuration information corresponding to a next task.

Alternatively, in some other implementations, a processor (such as a CPU) may execute configuration instructions corresponding to the tasks, and configure the task configuration information of the tasks into a memory. The configuration instructions include the task configuration information and configuration addresses of the corresponding tasks. The computing apparatus may read the task configuration information of the tasks from the memory, and configure the same to the first registers 450 in the available status, respectively. For example, in a specific implementation, the computing apparatus may read the task configuration information of a task from the memory based on the status information of the first registers 450 when a certain first register 450 is in the available status, so as to configure the task configuration information for that first register 450, and change the status information of that first register 450 from the available status to the unavailable status. After reading the task configuration information of a task from the memory, the computing apparatus may delete the read task configuration information from the memory, so as to avoid duplicate reading of the task configuration information. Alternatively, after reading the task configuration information of a task from the memory, the computing apparatus may also set the task configuration information of that task to a processed status, so that the processor writes task configuration information of a new task into a storage address of the task configuration information of that task.

The control circuit 440 is configured to: read the register information respectively corresponding to the tasks one by one in a preset manner, wherein the register information is used to uniquely identify one first register 450, the register information may include, for example, at least one of a register ID, a register name, and a register number, and the read register information refers to the register information of the first register 450 that is configured with the task configuration information of a task; enable the first register 450 identified by a currently read piece of register information to output the first configuration information to the reading circuit 410; enable the first register 450 identified by the currently read piece of register information to output the second configuration information to the computing circuit 420; enable the first register 450 identified by the currently read piece of register information to output the third configuration information to the storage circuit 430; control the reading circuit 410 to perform data reading in a time-sharing manner based on the first configuration information of the tasks; control the computing circuit 420 to perform data operations in a time-sharing manner based on the second configuration information of the tasks; and control the storage circuit 430 to perform data storage in a time-sharing manner based on the third configuration information of the tasks.

According to this embodiment, time-sharing processing for different tasks is implemented at various task processing stages (including configuration, data reading, data operations, and data storage). Configuration of a next task may be performed immediately after configuration of one task is completed; data reading of a next task may be performed immediately after data reading of one task is completed; data operations of a next task may be performed immediately after data operations of one task are completed; and data storage of a next task may be performed immediately after data storage of one task is completed. In this case, time-sharing multiplexing of configuration resources, data reading resources, data operation resources, and data storage resources is achieved. Thus, seamless scheduling of different tasks is implemented at various task processing stages, which can significantly reduce idle time of the configuration resources, the data reading resources, the data operation resources, and the data storage resources, thereby improving utilization of the configuration resources, the data reading resources, the data operation resources, and the data storage resources, and improving overall resource utilization and computational efficiency of the computing apparatus.

Optionally, in some implementations, the reading circuit 410, the computing circuit 420, and the storage circuit 430 may be configured to perform corresponding data reading, data operations, and data storage in parallel under the control of the control circuit 440. Thus, task processing may be implemented in parallel at different task processing stages, thereby further improving overall computational efficiency of the computing apparatus.

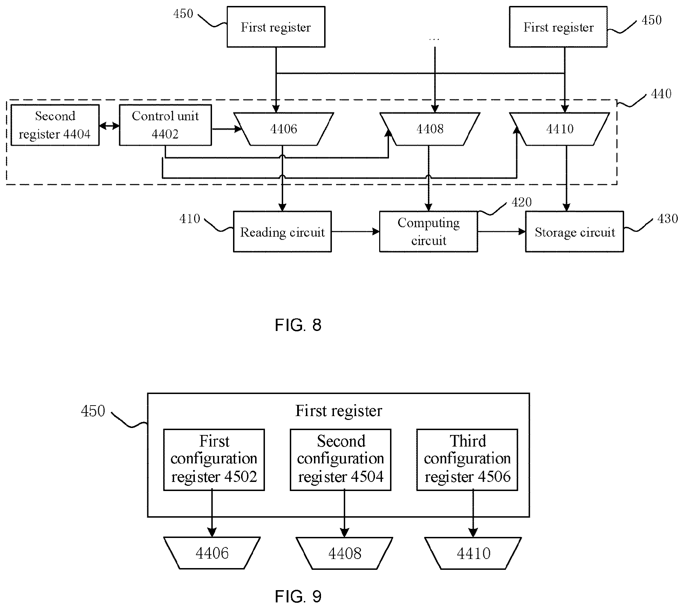

FIG. 8 is a schematic diagram of a structure of a computing apparatus according to another exemplary embodiment of this disclosure. As shown in FIG. 8, in some implementations, based on the embodiment shown in FIG. 7, the control circuit 440 may include a control unit 4402, a second register 4404, a first multiplexer (MUX) 4406, a second multiplexer 4408, and a third multiplexer 4410.

One end of the first multiplexer 4406 (which may be used as an input end) is electrically connected to the plurality of first registers 450, and the other end of the first multiplexer 4406 (which may be used as an output end) is electrically connected to the reading circuit 410. Thus, one first register among the plurality of first registers 450 may be selected to serve as an input source, and the first configuration information output from that first register 450 may be transmitted to the reading circuit 410. The first multiplexer 4406 may switch between different first registers 450 to sequentially transmit the first configuration information output from different first registers 450 to the reading circuit 410. One end of the second multiplexer 4408 (which may be used as an input end) is electrically connected to the plurality of first registers 450, and the other end of the second multiplexer 4408 (which may be used as an output end) is electrically connected to the computing circuit 420. Thus, one first register among the plurality of first registers 450 may be selected to serve as an input source, and a signal output from that first register 450 may be used as the input source to be transmitted to the computing circuit 420. The second multiplexer 4408 may switch between different first registers 450 to sequentially transmit the second configuration information output from different first registers 450 to the computing circuit 420. One end of the third multiplexer 4410 (which may be used as an input end) is electrically connected to the plurality of first registers 450, and the other end of the third multiplexer 4410 (which may be used as an output end) is electrically connected to the storage circuit 430. Thus, one first register among the plurality of first registers 450 may be selected to serve as an input source, and the third configuration information output from that first register 450 may be used as the input source to be transmitted to the storage circuit 430. The third multiplexer 4410 may switch between different first registers 450 to sequentially transmit signals output from different first registers 450 to the storage circuit 430.

The second register 4404 is configured with a register information queue, which is used to cache the register information respectively corresponding to the tasks, for example, cache the register information respectively corresponding to the tasks in a FIFO manner. The register information respectively corresponding to the tasks in the register information queue may be implemented in a configuration manner consistent with that for the task configuration information of the tasks in the first registers. In a specific implementation, after the task configuration information of a task is configured for a first register 450, the register information corresponding to that first register 450 may be written into the register information queue in a FIFO manner.

The control unit 4402 is electrically connected to the second register 4404, the first multiplexer 4406, the second multiplexer 4408, and the third multiplexer 4410, and is configured to: poll to read one piece of register information in the register information queue in a FIFO manner; trigger the first multiplexer 4406 to establish a data transmission path between the first register 450 identified by the currently read piece of register information and the reading circuit 410; trigger the second multiplexer 4408 to establish a data transmission path between the first register 450 identified by the currently read piece of register information and the computing circuit 420; trigger the third multiplexer 4410 to establish a data transmission path between the first register 450 identified by the currently read piece of register information and the storage circuit 430; and in response to receiving a reading complete message sent from the reading circuit 410, iteratively perform the operation of polling to read one piece of register information in the register information queue, so as to read a next piece of register information in the register information queue to perform subsequent operations based on the next piece of read register information.

Adopting the circuit structure in this embodiment, the control unit 4402 may read a piece of register information in the register information queue in a FIFO manner each time; determine the first register 450 identified by this register information (referred to as a target first register 450 for ease of reference); trigger the first multiplexer 4406 to establish a data transmission path between the target first register 450 and the reading circuit 410, so that the target first register 450 transmits the first configuration information of the task configured in the target first register 450 (referred to as a target task for ease of reference) to the reading circuit 410 through this data transmission path; trigger the second multiplexer 4408 to establish a data transmission path between the target first register 450 and the computing circuit 420, so that the target first register 450 sends the second configuration information of the target task configured in the target first register 450 to the computing circuit 420 through this data transmission path; and trigger the third multiplexer 4410 to establish a data transmission path between the target first register 450 and the storage circuit 430, so that the target first register 450 transmits the third configuration information of the target task configured in the target first register 450 to the storage circuit 430 through this data transmission path. After receiving the first configuration information of the target task, if a current status is the available status or after data reading for a previous task is completed, the reading circuit 410 may immediately determine a storage address of source data corresponding to the target task in the storage space, read the corresponding source data from the storage address, and transmit the source data to the computing circuit 420 based on the first configuration information of the target task. After receiving the second configuration information of the target task and the source data of the target task that is transmitted by the reading circuit 410, if the current status is the idle status, or after a data operation on a previous task is completed, if an operation path required for the operation type indicated by the second configuration information of the target task is in the idle status, or after a data operation on a previous task of the same operation type is completed, the computing circuit 420 may immediately perform data operations corresponding to the operation type indicated by the second configuration information of the target task on the source data of the target task to obtain the destination data, and transmit the destination data to the storage circuit 430. After receiving the third configuration information of the target task and the destination data of the target task that is transmitted by the computing circuit 420, if the current status is the idle status, or after data storage for a previous task is completed, the storage circuit 430 may immediately determine a storage address of the destination data corresponding to the target task in the storage space based on the third configuration information of the target task, and store the destination data corresponding to the target task into the storage address in the storage space.

According to this embodiment, a specific implementation structure and control logic of a control circuit are provided. The register information queue is configured for the second register to cache the register information of the first registers used for various task configurations. The control unit polls the register information queue to read the register information, and controls the first multiplexer, the second multiplexer, and the third multiplexer to respectively establish the data transmission paths between the corresponding first register and the reading circuit 410, between the corresponding first register and the computing circuit 420, and between the corresponding first register and the storage circuit 430, so as to output the first configuration information, the second configuration information, and the third configuration information of the corresponding tasks. Thus, the reading circuit 410, the computing circuit 420, and the storage circuit 430 are controlled to perform the corresponding data reading, data operations, and data storage for the tasks, so that time-sharing processing and seamless scheduling for different tasks can be implemented at various task processing stages.

FIG. 9 is a schematic diagram of a structure of a first register according to an exemplary embodiment of this disclosure. As shown in FIG. 9, on the basis of the embodiment shown in FIG. 8, in some implementations, the first register 450 may include a first configuration register 4502, a second configuration register 4504, and a third configuration register 4506. The first configuration register 4502, the second configuration register 4504, and the third configuration register 4506 in the first register 450 are configured with the first configuration information, the second configuration information, and the third configuration information of a same task, respectively.

Correspondingly, in this embodiment, one end of the first multiplexer 4406 (serving as an input end) is specifically electrically connected to first configuration registers 4502 in the plurality of first registers 450, respectively. In this way, the control unit 4402 may trigger the first multiplexer 4406 to establish a data transmission path between the first configuration register 4502 in the first register 450 identified by the currently read piece of register information and the reading circuit 410, so as to transmit the first configuration information of a task that is output by the first configuration register 4502 to the reading circuit 410. In response to receiving the reading complete message sent from the reading circuit 410, the control unit 4402 may trigger the first multiplexer 4406 to establish a data transmission path between the first configuration register 4502 in the first register 450 identified by a next piece of register information that is read by rolling the register information queue and the reading circuit 410, so as to transmit the first configuration information of a next task that is output by the first configuration register 4502 in the first register 450 identified by the next piece of register information to the reading circuit 410.

One end of the second multiplexer 4408 (serving as an input end) is specifically electrically connected to second configuration registers 4504 in the plurality of first registers 450, respectively. In this way, the control unit 4402 may trigger the second multiplexer 4408 to establish a data transmission path between the second configuration register 4504 in the first register 450 identified by the currently read piece of register information and the computing circuit 420, so as to transmit the second configuration information of a task that is output by the second configuration register 4504 to the computing circuit 420. In response to receiving an operation complete message sent from the computing circuit 420, the control unit 4402 may trigger the second multiplexer 4408 to establish a data transmission path between the second configuration register 4504 in the first register 450 identified by a next piece of register information that is read by rolling the register information queue and the computing circuit 420, so as to transmit the second configuration information of a next task that is output by the second configuration register 4504 in the first register 450 identified by the next piece of register information to the computing circuit 420.

One end of the third multiplexer 4410 (serving as an input end) is specifically electrically connected to third configuration registers 4506 in the plurality of first registers 450, respectively. In this way, the control unit 4402 may trigger the third multiplexer 4410 to establish a data transmission path between the third configuration register 4506 in the first register 450 identified by the currently read piece of register information and the storage circuit 430, so as to transmit the third configuration information of a task that is output by the first configuration register 4502 to the storage circuit 430. In response to receiving a storage complete message sent from the storage circuit 430, the control unit 4402 may trigger the third multiplexer 4410 to establish a data transmission path between the third configuration register 4506 in the first register 450 identified by a next piece of register information that is read by rolling the register information queue and the storage circuit 430, so as to transmit the third configuration information of a next task that is output by the third configuration register 4506 in the first register 450 identified by the next piece of register information to the storage circuit 430.

According to this embodiment, each first register includes a first configuration register for configuring the first configuration information, a second configuration register for configuring the second configuration information, and a third configuration register for configuring the third configuration information. In other words, the first configuration information for reading the source data, the second configuration information for characterizing the operation types, and the third configuration information for storing the destination data of a same task are configured separately. In this way, after the reading circuit completes data reading for a task, the first multiplexer may be immediately controlled to establish a data transmission path between the first configuration register corresponding to a next task and the reading circuit, so as to start data reading for the next task. After the computing circuit completes a data operation for a task, the second multiplexer may be immediately controlled to establish a data transmission path between the second configuration register corresponding to a next task and the computing circuit, so as to start a data operation for the next task. After the storage circuit completes data storage for a task, the third multiplexer may be immediately controlled to establish a data transmission path between the third configuration register corresponding to a next task and the storage circuit, so as to start data storage for the next task. In this way, separate control for data reading, data operation, and data storage is implemented, thereby supporting parallel processing of different tasks at the stages of data reading, data operation, and data storage.

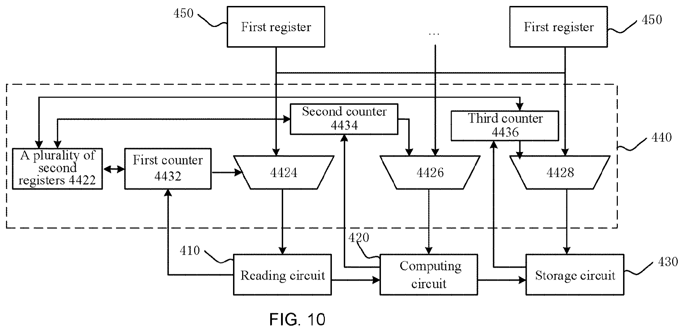

FIG. 10 is a schematic diagram of a structure of a computing apparatus according to still another exemplary embodiment of this disclosure. As shown in FIG. 10, in some implementations, based on the embodiment shown in FIG. 7, the control circuit 440 may include a plurality of second registers 4422, a first multiplexer 4424, a second multiplexer 4426, a third multiplexer 4428, a first counter 4432, a second counter 4434, and a third counter 4436.

One end of the first multiplexer 4424 (which may be used as an input end) is electrically connected to the plurality of first registers 450, and the other end of the first multiplexer 4424 (which may be used as an output end) is electrically connected to the reading circuit 410. Thus, one first register among the plurality of first registers 450 may be selected to serve as an input source, and the first configuration information output from that first register 450 may be transmitted to the reading circuit 410. The first multiplexer 4424 may switch between different first registers 450 to sequentially transmit the first configuration information output from different first registers 450 to the reading circuit 410. One end of the second multiplexer 4426 (which may be used as an input end) is electrically connected to the plurality of first registers 450, and the other end of the second multiplexer 4426 (which may be used as an output end) is electrically connected to the computing circuit 420. Thus, one first register among the plurality of first registers 450 may be selected to serve as an input source, and a signal output from that first register 450 may be used as the input source to be transmitted to the computing circuit 420. The second multiplexer 4426 may switch between different first registers 450 to sequentially transmit the second configuration information output from different first registers 450 to the computing circuit 420. One end of the third multiplexer 4428 (which may be used as an input end) is electrically connected to the plurality of first registers 450, and the other end of the third multiplexer 4428 (which may be used as an output end) is electrically connected to the storage circuit 430. Thus, one first register among the plurality of first registers 450 may be selected to serve as an input source, and the third configuration information output from that first register 450 may be used as the input source to be transmitted to the storage circuit 430. The third multiplexer 4428 may switch between different first registers 450 to sequentially transmit signals output from different first registers 450 to the storage circuit 430.

The first counter 4432 is electrically connected to the first multiplexer 4424, the second counter 4434 is electrically connected to the second multiplexer 4426, and the third counter 4436 is electrically connected to the third multiplexer 4428.

At least one of the plurality of second registers 4422 is configured to form a register information queue, which is used to cache the register information respectively corresponding to the tasks. One of the plurality of second registers 4422 is configured to cache the register information corresponding to one task, separately. In this embodiment, the second register 4422 may be used as a flip-flop. The register information queue may be a sequential logic unit including at least one flip-flop, for temporarily storing binary data (a bit sequence) and transmit these data under control of a counter signal. A quantity of second registers 4422 included in the control circuit 440 (that is, a quantity of the plurality of second registers 4422) is consistent with that of first registers 450 included in the computing apparatus (that is, a quantity the plurality of first registers 450). The second register 4422 may have same register information as the corresponding first register 450. After the task configuration information of a task is configured for a first register 450, a bit position of the second register 4422 corresponding to the first register 450 may be set to 1. The register information of the second register 4422 with the bit position of 1 is used to character the register information corresponding to the corresponding task. Different second registers 4422 may form a register information queue according to an order of configuration time of the bit position 1.

The first counter 4432 is configured to: in response to receiving a reading complete message sent from the reading circuit 410, update a count value, such as adding 1 to the count value; and in response to a change in the count value, trigger the first multiplexer 4424 to establish a data transmission path between a next first register 450 identified by the register information cached by a next second register 4422 in the register information queue and the reading circuit 410. The next second register 4422 refers to a second register 4422 in the register information queue that is determined in a FIFO manner, and is configured to cache a piece of register information corresponding to a next task. In a specific implementation, in an initial case, that is, when an initial count value is 0, the first counter 4432 may trigger the first multiplexer 4424 to establish a data transmission path between the first first register 450 identified by the register information cached by a first second register 4422 in the register information queue and the reading circuit 410; and then each time receiving a reading complete message sent from the reading circuit 410, add 1 to the count value to trigger the first multiplexer 4424 to establish a data transmission path between a next first register 450 and the reading circuit 410. Thus, each time completing reading of the corresponding source data based on the first configuration information of a task, the reading circuit 410 may send a reading complete message to the first counter 4432, which updates the count value once. In this case, a next first register 450 is triggered to output the first configuration information of a next task to the reading circuit 410, so as to read the corresponding source data based on the first configuration information of the next task. Thus, by updating the count value based on the reading complete message through the first counter, seamless scheduling for different tasks at the data reading stage may be automatically triggered.

The second counter 4434 is configured to: in response to receiving a data operation complete message sent from the computing circuit 420, update a count value, such as adding 1 to the count value; and in response to a change in the count value, trigger the second multiplexer 4426 to establish a data transmission path between the next first register 450 identified by the register information cached by the next second register 4422 and the computing circuit 420. In a specific implementation, in an initial case, that is, when an initial count value is 0, the second counter 4434 may trigger the second multiplexer 4426 to establish a data transmission path between the first first register 450 identified by the register information cached by the first second register 4422 in the register information queue and the computing circuit 420; and then each time receiving a data operation complete message sent from the computing circuit 420, add 1 to the count value to trigger the second multiplexer 4426 to establish a data transmission path between a next first register 450 and the computing circuit 420. Thus, each time completing a corresponding data operation based on the second configuration information of a task, the computing circuit 420 may send an operation complete message to the second counter 4434, which updates the count value once. In this case, the next first register 450 is triggered to output the second configuration information of the next task to the computing circuit 420, so as to perform a corresponding data operation based on the second configuration information of the next task and the source data of the next task that is read by the reading circuit 410. Thus, by updating the count value based on the operation complete message through the second counter 4434, seamless scheduling for different tasks in the data operation stage may be automatically triggered.

The third counter 4436 is configured to: in response to receiving a storage complete message sent from the storage circuit 430, update a count value, such as adding 1 to the count value; and in response to a change in the count value, trigger the third multiplexer 4428 to establish a data transmission path between a next first register 450 identified by the register information cached by the next second register 4422 and the storage circuit 430. In a specific implementation, in an initial case, that is, when an initial count value is 0, the third counter 4436 may trigger the third multiplexer 4428 to establish a data transmission path between the first first register 450 identified by the register information cached by the first second register 4422 in the register information queue and the storage circuit 430; and then each time receiving a storage complete message sent from the storage circuit 430, add 1 to the count value to trigger the third multiplexer 4428 to establish a data transmission path between a next first register 450 and the storage circuit 430. Thus, each time completing corresponding data storage based on the third configuration information of a task, the storage circuit 430 may send a storage complete message to the third counter 4436, which updates the count value once. In this case, the next first register 450 is triggered to output the third configuration information of the next task to the storage circuit 430, so as to perform, based on the third configuration information of the next task, data storage on a data operation result (that is, the destination data) obtained by the computing circuit 420. Thus, by updating the count value based on the storage complete message through the third counter 4436, seamless scheduling for different tasks at the data storage stage may be automatically triggered.

In a specific implementation, the first counter 4432, the second counter 4434, and the third counter 4436 may count from zero (0) to a preset maximum count value, separately. Each time being updated, the count value may be incremented by 1. When the count value is updated after being updated to the maximum count value, the count value may be updated to 0 (that is, being reset to 0). The maximum count value may be N-1, where N is a quantity of the plurality of first registers 450 (that is, the first registers 450 or the second registers 4422 included in the computing apparatus), and a value of N is an integer greater than 1. In this case, for each counting period of the first counter 4432, the second counter 4434, and the third counter 4436, the task configuration information (including the first configuration information, the second configuration information, and the third configuration information) in the plurality of first registers 450 may be rolled and output once.

According to this embodiment, a specific implementation structure and control logic of another control circuit are provided. At least one second register is configured to form the register information queue for caching the register information of the first registers used for various task configurations. Through the updates of the count values of the first counter 4432, the second counter 4434, and the third counter 4436, the first multiplexer 4424, the second multiplexer 4426, the third multiplexer 4428 are triggered to respectively establish the data transmission paths between the first register corresponding to the next task and the reading circuit 410, between the corresponding first register and the computing circuit 420, and between the corresponding first register and the storage circuit 430, so as to output the first configuration information, the second configuration information, and the third configuration information of the corresponding tasks. Thus, the reading circuit 410, the computing circuit 420, and the storage circuit 430 are controlled to perform the corresponding data reading, data operations, and data storage for the tasks, so that time-sharing processing and seamless scheduling for different tasks can be implemented at the task processing stage.

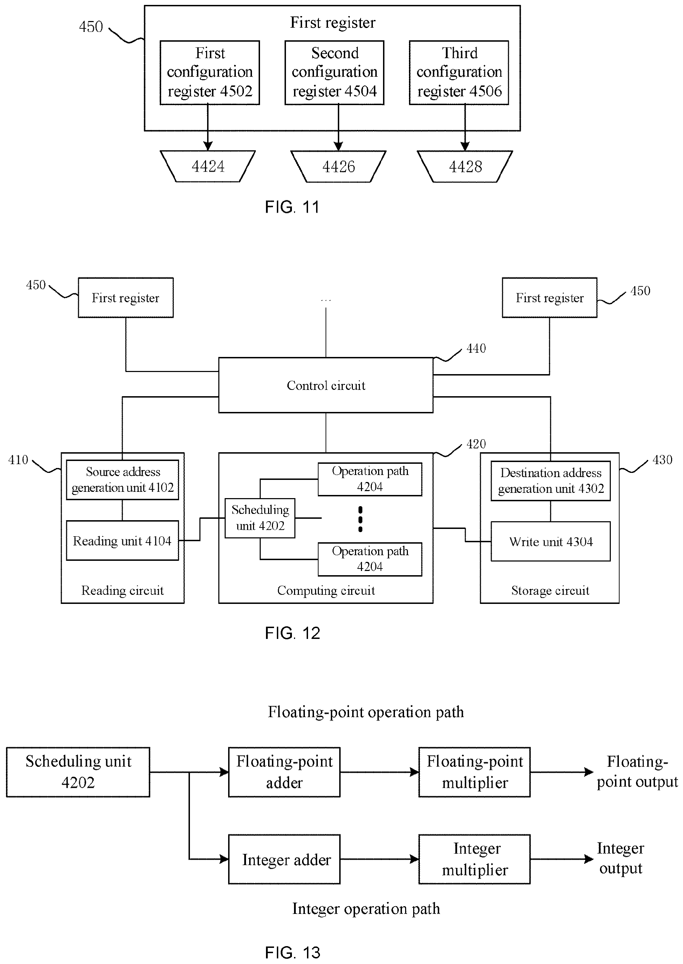

FIG. 11 is a schematic diagram of a structure of a first register according to another exemplary embodiment of this disclosure. As shown in FIG. 11, on the basis of the embodiment shown in FIG. 10, in some implementations, the first register 450 may include a first configuration register 4502, a second configuration register 4504, and a third configuration register 4506. The first configuration register 4502, the second configuration register 4504, and the third configuration register 4506 in the first register 450 are configured with the first configuration information, the second configuration information, and the third configuration information of a same task, respectively.

Correspondingly, in this embodiment, one end of the first multiplexer 4424 (serving as an input end) is specifically electrically connected to first configuration registers 4502 in the plurality of first registers 450, respectively. It may be selected to transmit the first configuration information output from one of the plurality of first configuration registers 4502 to the reading circuit 410. In this way, the first counter 4432 may trigger the first multiplexer 4424 to establish a data transmission path between the first configuration register 4502 in a first register 450 and the reading circuit 410, so as to transmit the first configuration information of a task that is output by the first configuration register 4502 to the reading circuit 410. In response to receiving the reading complete message sent from the reading circuit 410, the first counter 4432 may trigger the first multiplexer 4424 to establish a data transmission path between the first configuration register 4502 in the next first register 450 and the reading circuit 410, so as to transmit the first configuration information of a next task that is output by the first configuration register 4502 in the next first register 450 to the reading circuit 410.

One end of the second multiplexer 4426 (serving as an input end) is specifically electrically connected to second configuration registers 4504 in the plurality of first registers 450, respectively. It may be selected to transmit the second configuration information output from one of the plurality of second configuration registers 4504 to the computing circuit 420. In this way, the second counter 4434 may trigger the second multiplexer 4426 to establish a data transmission path between the second configuration register 4504 in a second register 450 and the computing circuit 420, so as to transmit the second configuration information of a task that is output by the second configuration register 4504 to the computing circuit 420. In response to receiving the operation complete message sent from the computing circuit 420, the second counter 4434 may trigger the second multiplexer 4426 to establish a data transmission path between the second configuration register 4504 in the next first register 450 and the computing circuit 420, so as to transmit the second configuration information of a next task that is output by the second configuration register 4504 in the next first register 450 to the computing circuit 420.

One end of the third multiplexer 4428 (serving as an input end) is specifically electrically connected to third configuration registers 4506 in the plurality of first registers 450, respectively. It may be selected to transmit the third configuration information output from one of the plurality of third configuration registers 4506 to the storage circuit 430. In this way, the third counter 4436 may trigger the third multiplexer 4428 to establish a data transmission path between the third configuration register 4506 in a third register 450 and the storage circuit 430, so as to transmit the third configuration information of a task that is output by the third configuration register 4506 to the storage circuit 430. In response to receiving the storage complete message sent from the storage circuit 430, the third counter 4436 may trigger the third multiplexer 4428 to establish a data transmission path between the third configuration register 4506 in the next first register 450 and the storage circuit 430, so as to transmit the third configuration information of a next task that is output by the third configuration register 4506 in the next first register 450 to the storage circuit 430.

According to this embodiment, each first register includes a first configuration register for configuring the first configuration information, a second configuration register for configuring the second configuration information, and a third configuration register for configuring the third configuration information. In other words, the first configuration information for reading the source data, the second configuration information for characterizing the operation types, and the third configuration information for storing the destination data of a same task are configured separately. In this way, after the reading circuit completes data reading for a task, the first multiplexer may be immediately triggered to establish a data transmission path between the first configuration register corresponding to a next task and the reading circuit, so as to start data reading for the next task. After the computing circuit completes a data operation for a task, the second multiplexer may be immediately triggered to establish a data transmission path between the second configuration register corresponding to a next task and the computing circuit, so as to start a data operation for the next task. After the storage circuit completes data storage for a task, the third multiplexer may be immediately triggered to establish a data transmission path between the third configuration register corresponding to a next task and the storage circuit, so as to start data storage for the next task. In this way, separate control for data reading, data operation, and data storage is implemented, thereby supporting parallel processing of different tasks at the stages of data reading, data operation, and data storage.

Optionally, in some implementations of any embodiment of this disclosure, the first configuration information may include at least one piece of source data addressing information. Each piece of the source data addressing information may include but is not be limited to a start address (Addr_st), a dimension storage order, dimension sizes, and magnitudes and strides of dimensions. In addition, each piece of the source data addressing information may selectively include but is not limited to at least one of the following items: a quantity of the dimensions, a data type length, and a symbol mark.

The at least one piece of source data addressing information refers to information for determining a storage address of at least one piece of source data in the storage space, and the at least one piece of source data refers to source data required for a data operation on the corresponding task. Each piece of the source data addressing information is used to determine a storage address of a piece of source data in the storage space. A quantity of the pieces of the source data required for the data operation on the corresponding task is same as that of the at least one piece of source data addressing information included in the first configuration information. For example, taking the data operation on the corresponding task being convolution as an example, two pieces of source data are involved, one of which may be a feature data tensor and the other may be a convolution kernel tensor. In this case, the at least one piece of source data addressing information includes source data addressing information of the feature data tensor and source data addressing information of the convolution kernel tensor. Fields and meanings of the fields included in the source data addressing information of each piece of source data are consistent.

In the embodiments of this disclosure, the source data for data operations may be data in various dimensions, such as tensors in various dimensions. Specifically, the source data may be a one-dimensional tensor (that is, a vector), a two-dimensional tensor (that is, a matrix), or a higher-dimensional tensor such as a three-dimensional or a four-dimensional tensor. Taking computing in the AI field as an example, three-dimensional tensors are data commonly used in convolution operations. A particular dimension of a tensor may be referred to as an axis. For example, the two-dimensional tensor has a row axis and a column axis.

The start address refers to a start address where the source data is stored in the storage space.

The dimension storage order is used to characterize a storage order of different dimensions of the source data. For three-dimensional data, the storage order may be an order of storing according to x, y, and z directions, sequentially.

The dimension size is used to describe a size of each dimension in the source data. When the source data is a tensor, the dimension size is also referred to as a shape. For example, a tensor with a shape (3, 4) represents a matrix with 3 rows and 4 columns.

The magnitude, also referred to as a size, of the dimension is used to describe a quantity of elements in the source data in the dimension (that is, an independent direction or axis). Taking the source data being a three-dimensional tensor as an example, the magnitudes of the dimensions are magnitudes of the three-dimensional tensor in three dimensions, that is, an x-direction magnitude Size_x, a y-direction magnitude Size_y, and a z-direction magnitude Size_z.

The stride of the dimension, also referred to as a storage interval of the dimension, is used to characterize a storage interval between elements of the source data in each dimension (that is, an independent direction or axis). Taking the source data being three-dimensional data as an example, the strides of the dimensions may include an x-direction storage interval stride_x, a y-direction storage interval stride_y, and a z-direction storage interval stride_z.

A person skilled in the art may understand that for a fixed storage space size, the storage interval and the dimension magnitude satisfy a predetermined condition. Still taking three-dimensional tensor data as an example, if it is assumed that n (n is an integer greater than 1) data points are stored in the storage space, it is satisfied that: stride_x≥Size_x/n, stride_y≥Size_y/n, and stride_z≥Size_z/n. The quantity of the dimensions refers to a quantity of dimensions of the source data. When the source data is a tensor, the quantity of dimensions may also be referred to as order or rank. For example, an order of a scalar is 0, an order of a vector is 1, and an order of a matrix is 2.

The data type length is used to describe a data type length of the source data, such as 8 bits or 16 bits.

The symbol marker is used to describe whether the source data is a signed or unsigned number.

FIG. 12 is a schematic diagram of a structure of a computing apparatus according to yet another exemplary embodiment of this disclosure. As shown in FIG. 12, on the basis of any one of the foregoing embodiments of the computing apparatus, in some implementations, the reading circuit 410 may include a source address generation unit 4102 and a reading unit 4104. The source address generation unit 4102 may be electrically connected to the control circuit 440, and is configured to: in response to receiving the first configuration information of a task, generate a first storage address in the memory for the source data based on the first configuration information of that task, and send the first storage address to the reading unit 4104. The first storage address refers to a storage address, in the memory, of the source data that is generated by the source address generation unit. Taking the source data being three-dimensional tensor data as an example, the source data addressing information may include: a start address of the source data, a quantity 3 of dimensions, a dimension storage order in x, y, and z directions, a quantity of elements in the x-direction, a quantity of elements in the y-direction, a quantity of elements in the z-direction, an x-direction storage interval stride_x, a y-direction storage interval stride_y, and a z-direction storage interval stride_z. In this way, a storage address of any part of the three-dimensional tensor data in the storage space may be obtained. Specifically, a storage address of any point (x, y, z) in the storage space may be obtained according to an address calculation formula: Addr_st + x*stride_x+ y*stride_y+ z*stride_z.

The reading unit 4104 is electrically connected to the source address generation unit 4102 and the computing circuit 420, and is configured to: perform data reading based on the first storage address generated by the source address generation unit 4102; send the read source data to the computing circuit 420; and send a reading complete message to the control circuit 440 after the source data is sent, so that in response to the reading complete message, the control circuit 440 polls to read a next piece of register information, such as a next piece of register information in the register information queue, and enables the first register 450 identified by the next piece of register information to output the first configuration information of a next task to the reading circuit 410, so as to start data reading for the next task. In a specific implementation example, after the source data is sent, the reading unit 4104 may send an interrupt signal to the control circuit 440 to serve as the reading complete message, or may send the reading complete message to the control circuit 440 in a form of a hardware interrupt. A specific manner in which the reading unit 4104 sends the reading complete message to the control circuit 440 is not limited in this embodiment of this disclosure.

According to this embodiment, an implementation structure of the reading circuit is provided, including the source address generation unit and the reading unit. The source address generation unit generates the first storage address of the source data in the memory based on the first configuration information of the task, and the reading unit performs data reading based on the first storage address and sends the read source data to the computing circuit. Thus, pipeline processing of generating the storage address of the source data in the memory and reading the source data is implemented. In this way, generation of storage addresses for source data of different tasks in the memory and reading of the source data can be executed in parallel, thereby further improving reading efficiency of the source data.

Optionally, in some implementations of any embodiment of this disclosure, the third configuration information may include destination data addressing information, which may include but is not be limited to a start address, a dimension storage order, dimension sizes, and magnitudes and strides of dimensions. In addition, the destination data addressing information may selectively include but is not limited to at least one of the following items: a quantity of the dimensions, a data type length, and a symbol mark.

The destination data addressing information refers to information used to determine the storage address of the destination data in the storage space, where the destination data is operation result data generated by the computing circuit 420 executing a data operation. It may be understood that, fields and meanings included in the destination data addressing information may be similar to those included in the source data addressing information, and a difference is that the source data addressing information is used to determine the storage address of the source data in the storage space, while the destination data addressing information is used to determine the storage address of the operation result data in the storage space. Therefore, the fields included in the destination data addressing information are not described in detail herein. It should be understood that specific values of the fields included in the destination data addressing information may be different from the specific values of the corresponding fields included in the source data addressing information. Thus, a specific data structure and a storage position defined thereby of the destination data may be different from those of the source data.

Referring to FIG. 12 again, in some implementations of any embodiment of this disclosure, the storage circuit 430 may include a destination address generation unit 4302 and a write unit 4304.

The destination address generation unit 4302 may be electrically connected to the control circuit 440, and is configured to: in response to receiving the third configuration information corresponding to the task, generate a second storage address in the memory for the destination data based on the third configuration information of the task, and send the second storage address to the write unit 4304. The second storage address refers to a storage address of the destination data in the memory. For a specific manner of generating the storage address of the destination data in the memory based on the start address, the dimension storage order, the dimension sizes, and the magnitudes and strides of the dimensions in the destination data addressing information, reference may be made to the implementation manner of obtaining the storage address of any point (x, y, z) in the source data in the storage space based on the source data addressing information, and details are not described herein.

The write unit 4304 is electrically connected to the destination address generation unit 4302 and the computing circuit 420, and is configured to: write the destination data obtained by performing a data operation by the computing circuit 420 into the second storage address generated by the destination address generation unit 4302; and send a storage complete message to the control circuit 440 after the destination data is written, so that in response to the storage complete message, the control circuit 440 enables the first register 450 identified by a next piece of register information, such as a next piece of register information in the register information queue, to output the third configuration information of a next task to the storage circuit 430. In a specific implementation example, after the destination data is written, the write unit 4304 may send an interrupt signal to the control circuit to serve as a write complete message, or may send the write complete message to the control circuit in a form of a hardware interrupt. A specific manner in which the write unit sends the write complete message to the control circuit 440 is not limited in this embodiment of this disclosure.

According to this embodiment, an implementation structure of the storage circuit is provided. The destination address generation unit may determine the storage address of the destination data in the memory based on the destination data addressing information. Target data serving as a data operation result is stored into the corresponding storage address by the write unit, so that the target data may be stored in a required manner, which facilitates management of an internal address and also facilitates subsequent operations on the target data. Taking the operation type being a convolution operation as an example, an operation process involves using convolution kernels to perform convolution operations on various parts of multi-channel image data sequentially. A result of each convolution operation is used as a part of a frame of image data. By storing a part of the image data obtained from each convolution operation according to a predetermined rule, finally the entire frame of image data may be constantly stored in a predetermined order. This facilitates the management of the internal address, and also facilitates subsequent operations such as loading, moving, and computing on this frame of image data, thereby further improving computational efficiency. In addition, the destination address generation unit generates the second storage address of the destination data in the memory based on the third configuration information of the task, and the write unit writes the destination data into the second storage address. Thus, pipeline processing of generating the storage address of the destination data in the memory and writing the destination data is implemented. In this way, generation of storage addresses for destination data of different tasks in the memory and data storage can be executed in parallel, thereby further improving data storage efficiency.

Optionally, referring to FIG. 12 again, in some implementations of any embodiment of this disclosure, the computing circuit 420 may include a scheduling unit 4202 and a plurality of operation paths 4204. Each operation path 4204 supports one operation type 4204 and includes at least one computing unit. A plurality of operation paths 4204 with any quantity may support a same operation type, or may support different operation types separately. This may be set according to actual task requirements, and is not limited in this embodiment of this disclosure. As shown in FIG. 13, in an exemplary embodiment, the computing circuit 420 includes two operation paths: a floating-point operation path for supporting a floating-point operation type and an integer operation path for supporting an integer operation types. The floating-point operation path includes a floating-point adder and a floating-point multiplier. The integer operation path includes an integer adder and an integer multiplier. Any two operation paths 4204 may be homogeneous or heterogeneous vector accelerators. To be specific, any two operation paths 4204 may adopt a same structure or different structures. For example, types and a quantity of computing units included in one operation path 4204 may be same as or different from types and a quantity of computing units included in another operation path 4204. Each computing unit may complete one basic operation. For example, the computing unit may be a reduce sum unit for calculating a sum of all elements in a vector. For another example, the computing unit may be an FMUL unit for performing a floating-point multiplication operation. For still another example, the computing unit may be an FADD unit for performing a floating-point addition operation. The specific computing unit may be set according to actual requirements.

The scheduling unit 4202 is electrically connected to the reading circuit 440 (or the reading unit 4104 therein) and the control circuit 440, and is configured to: in response to receiving the second configuration information and source data corresponding to one of the tasks, determine whether there is currently an available target operation path that support a target operation type characterized by the second configuration information, where the available target operation path refers to a target operation path that is in the available status (also referred to as the idle status), the target operation path refers to an operation path among the plurality of operation paths 4204 that supports the target operation type, and the target operation type refers to an operation type characterized by the second configuration information of the one task; and in response to that there is currently an available target operation path, call a target operation path to perform a data operation corresponding to the target operation type on the source data of the task. For example, the target operation path may be enabled to enter a working status by enabling the computing units on the target operation path, so as to transmit the source data to a start computing unit on the target operation data path, and provide working clocks to the computing units on the target operation path to control a working sequence of the computing units. Thus, the computing units are enabled to work together to perform a data operation on the source data, and send an operation complete message to the control circuit 440 after the data operation is completed, so that in response to the operation complete message, the control circuit 440 enables the first register 450 identified by a next piece of register information in the register information queue to output the second configuration information of a next task to the computing circuit 420. In a specific implementation, when starting to call a target operation path to perform the data operation corresponding to the target operation type on the source data of the task, status information of the called target operation path may be changed from the available status to the unavailable status, and after the data operation is completed, the status information may be changed from the unavailable status to the available status to release computing resources in a timely manner.

Optionally, in some implementations, the scheduling unit 4202 may determine whether there is currently an available target operation path according to the following ways: determining operation types supported by the plurality of operation paths 4204 in the computing circuit 420, respectively; determining, based on the operation types supported by the operation paths 4204, at least one target operation path among the operation paths 4204 that supports the target operation type characterized by the second configuration information; determining whether there is a target operation path in the available status in the at least one target operation path based on status information of the at least one target operation path; if there is a target operation path in the available status in the at least one target operation path, determining that there is currently an available target operation path; or otherwise, if there is no target operation path in the available status in the at least one target operation path, determining that there is currently no available target operation path.

Optionally, in some other implementations, the scheduling unit 4202 may be pre-configured with fourth configuration information that is used to characterize the operation types supported by the plurality of operation paths 4204 in the computing circuit 420; in response to receiving the second configuration information corresponding to a task, determine, based on the fourth configuration information, at least one target operation path that supports the target operation type characterized by the second configuration information; determine whether there is a target operation path in the available status in the at least one target operation path based on status information of the at least one target operation path; if there is a target operation path in the available status in the at least one target operation path, determine that there is currently an available target operation path; or otherwise, if there is no target operation path in the available status in the at least one target operation path, determine that there is currently no available target operation path.

Optionally, in still some other implementations, the computing units in the computing circuit 420 may have one or more combinations. Each computing unit may be used separately, that is, as an independent operation path. Different computing units may also be combined according to operational requirements, and different combinations form different operation paths. In response to receiving the second configuration information corresponding to a task, the scheduling unit 4202 determines a dependency relationships between at least one computing unit required for the target operation type characterized by the second configuration information and the at least one computing unit; determines whether computing units currently in the available status among the computing units included in the computing circuit 420 include the at least one computing unit; in response to that the computing units currently in the available status include the at least one computing unit, determines that there is currently an available target operation path, selects the at least one computing unit from the computing units currently in the available status, forms a target operation path based on the dependency relationship to perform a data operation on the source data of the task, and changes status information of the selected at least one computing unit and the formed target operation path from the available status to the unavailable status; and in response to that the computing units currently in the available status do not include at least some of the one or more computing units, determines that there is currently no available target operation path.

The target operation path 4204 is electrically connected to the scheduling unit 4202 and the storage circuit 430 (or the write unit 4304 therein), and is configured to: according to the calling of the scheduling unit 4202, perform, by using at least one computing unit on the target operation path 4204, a data operation corresponding to the target operation type on the source data corresponding to the task that is sent by the scheduling unit 4202; controls the computing units on the target operation path 4204 to work according to a certain working sequence to complete computing of the source data; and in response to completion of the data operation, send the destination data obtained through the data operation to the storage circuit 430.

According to this embodiment, the computing circuit may include the scheduling unit and the plurality of operation paths. Each operation path may support one operation type. Therefore, based on the operation types supported by the plurality of operation paths, parallel processing for a plurality of tasks of corresponding operation types may be supported. The scheduling unit may call, based on the target operation type characterized by the second configuration information of the tasks and status information of the plurality of operation paths, an available operation path supporting the target operation type from the plurality of operation paths for data operations. Based on the computing circuit, when the plurality of operation paths support a plurality of operation types, data operations may be performed in parallel for tasks of the plurality of operation types. For a plurality of tasks of a same operation type, based on the status information of at least one operation path supporting the operation type, a data operation for a next task may be started immediately when any one of the one or more operation paths is in the available status. Thus, data operation efficiency is further improved, thereby improving overall computational efficiency of the computing apparatus.

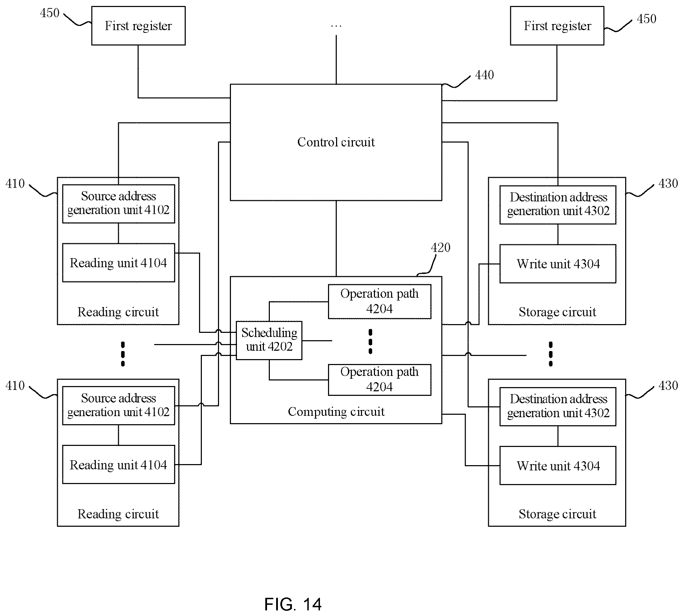

FIG. 14 is a schematic diagram of a structure of a computing apparatus according to still yet another exemplary embodiment of this disclosure. As shown in FIG. 14, on the basis of any one of the foregoing embodiments of the computing apparatus, in some implementations, the computing apparatus may specifically include a plurality of reading circuits 410 and a plurality of storage circuits 430. The plurality of reading circuits 410 and the plurality of storage circuits 430 are electrically connected to the computing circuit 420 and the control circuit 440, respectively.

The control circuit 440 is further configured to: cache the register information respectively corresponding to the tasks in a FIFO manner through the register information queue; poll to read one piece of register information in the register information queue in a FIFO manner; enable the first register 450 identified by the currently read piece of register information to output the first configuration information to an available reading circuit 410; enable the first register 450 identified by the currently read piece of register information to output the second configuration information to the computing circuit 420; enable the first register 450 identified by the currently read piece of register information to output the third configuration information to an available storage circuit 430, where the available reading circuit 410 refers to a reading circuit 410 that currently does not perform a data reading operation, and the available storage circuit 430 refers to a storage circuit 430 that currently does not perform a data storage operation; control the reading circuits 410 to perform data reading in a time-sharing manner based on the first configuration information of the tasks; control the computing circuit 420 to perform data operations in a time-sharing manner based on the second configuration information of the tasks; and control the storage circuits 430 to perform data storage in a time-sharing manner based on the third configuration information of the tasks.

In a specific implementation, after the control circuit 440 enables the first register 450 identified by the currently read piece of register information to output the first configuration information to an available reading circuit 410, the status information of the reading circuit 410 may be changed from the available status to the unavailable status. In response to that the reading complete message sent from the reading circuit 410 is received, the status information of the reading circuit 410 may be changed from the unavailable status to the available status, so as to release data reading resources in a timely manner. Similarly, after the control circuit 440 enables the first register 450 identified by the currently read piece of register information to output the third configuration information to an available storage circuit 430, the status information of the storage circuit 430 may be changed from the available status to the unavailable status. In response to that the storage complete message sent from the storage circuit 430 is received, the status information of the storage circuit 430 may be changed from the unavailable status to the available status, so as to release data storage resources in a timely manner.

According to this embodiment, the computing apparatus includes a plurality of reading circuits and a plurality of storage circuits. Performing data reading and data storage for a plurality of tasks in parallel significantly reduces time required for data reading and data storage, thereby improving data reading efficiency and data storage efficiency. When the computing circuit includes a plurality of operation paths, parallel processing for a plurality of tasks may be supported at various task processing stages (including configuration, data reading, data operations, and data storage), which can exponentially improve overall computational efficiency of the computing apparatus.

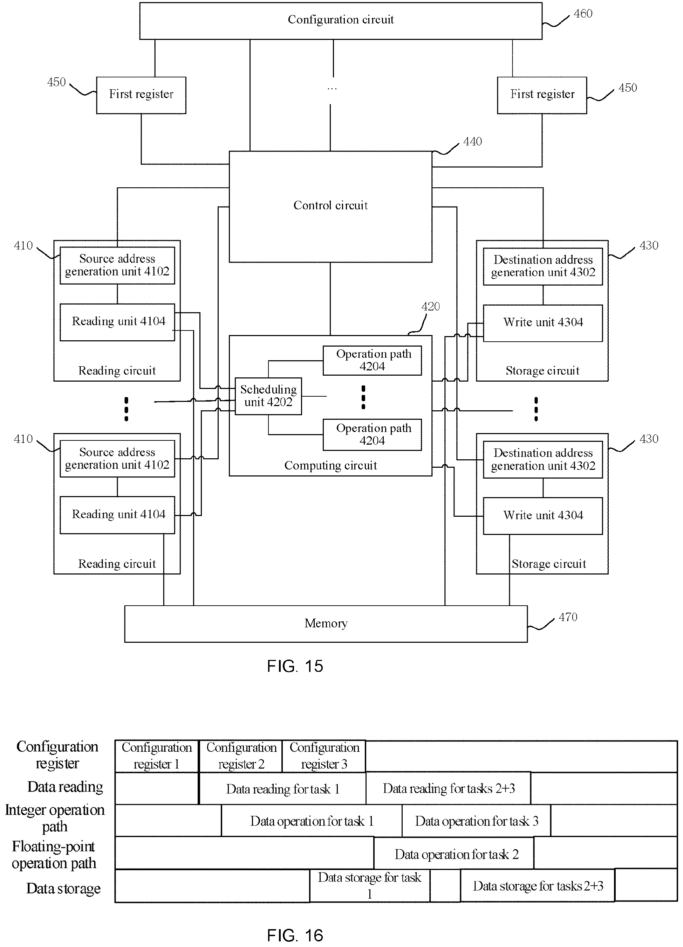

FIG. 15 is a schematic diagram of a structure of a computing apparatus according to a further exemplary embodiment of this disclosure. As shown in FIG. 15, on the basis of any one of the foregoing embodiments of the computing apparatus, the computing apparatus may further include a configuration circuit 460. The configuration circuit 460 is electrically connected to the first registers 450 and the control circuit 440, and is configured to: execute configuration instructions corresponding to the tasks in a time-sharing manner, to sequentially write the task configuration information in the configuration instructions corresponding to the tasks into an available first register 450 among the plurality of first registers 450, correspondingly; and write the register information of the available first register into the register information queue in the control circuit 440 in a FIFO manner. The available first register refers to a first register 450 among the plurality of first registers 450 that currently has no task configuration information configured.

For example, in some implementations, the task configuration information of the tasks may be generated according to task processing requirements by using any general or customized configuration manner through software of an application layer, and the configuration instructions corresponding to the tasks may be sent to the configuration circuit 460 sequentially by using the processor (such as the CPU). The configuration instructions include the task configuration information of the corresponding tasks. The configuration circuit 460 may execute the configuration instructions corresponding to the tasks in a time-sharing manner. Based on the status information of the first registers 450, the task configuration information in the configuration instructions corresponding to the tasks is sequentially written into an available first register 450, correspondingly. It is assumed that a register ID of the available first register 450 is 3, and the register ID "3" of this first register 450 to which the task configuration information of a task is written is written into the register information queue in a FIFO manner. Thus, the configuration of the first register configured with the task configuration information of the tasks is implemented. All register information in the register information queue is read one by one, so that the first registers configured with the task configuration information of the corresponding tasks may be determined, and the corresponding first registers may be enabled to output the first configuration information, the second configuration information, and the third configuration information to process the tasks. In a specific implementation, after the task configuration information of a task is written into an available first register 450 by the configuration circuit 460, status information of the configuration circuit 460 may be changed from the available status to the unavailable status.

According to this embodiment, the configuration circuit is disposed in the computing apparatus, so that the configuration instructions corresponding to the tasks may be executed in a time-sharing manner, thereby implementing time-sharing configuration for the task configuration information of the tasks in a plurality of first registers, and implementing time-sharing multiplexing of the configuration resources. In this case, seamless scheduling for different task configurations is implemented at various task configuration stages, and may be executed in parallel with other task processing stages (that is, data reading, data operations, and data processing), which can significantly reduce idle time of the configuration resources and improve utilization of the configuration resources, thereby enhancing overall resource utilization and computational efficiency of the computing apparatus.

Optionally, referring to FIG. 15 again, on the basis of any one of the foregoing embodiments, the computing apparatus may further include a memory 470, which is coupled to the reading circuit 410 and the storage circuit 430, for storing the source data and the destination data.

The memory 470, also referred to as an on-chip memory, may be any type of memory, such as a synchronous dynamic random access memory (SDRAM), a register file, or a flash memory. For example, the reading circuit 410 and the storage circuit 430 may be coupled to the memory 470 through buses, or may be indirectly connected to the memory 470 through intermediate devices. A specific mode in which the reading circuit 410 and the storage circuit 430 are coupled to the memory 470 is not limited in this embodiment of this disclosure.

According to this embodiment, the reading circuit and the storage circuit are respectively coupled to the memory, which helps the reading circuit to read the source data from the memory, and helps the storage circuit to store the destination data serving as the data operation result into the memory 470, thereby improving data reading efficiency and data storage efficiency.

According to the computing apparatus in this embodiment, it is assumed that two tasks having a data dependency relationship is a task 3 and a task 4. A data operation for the task 4 depends on computing result data (that is, destination data) of the task 3. The following two processing manners may be adopted. A first processing manner is to configure the task 3 and the task 4 as two consecutive tasks to be processed sequentially, and control an execution time sequence of the task 3 and the task 4 through an issuance time sequence of configuration instructions, so that the task 4 can be processed after the task 3 is processed (that is, the destination data of the task 3 is written into the storage space). A storage address of source data described by the first configuration information of the task 4 in the storage space is configured as a storage address of the destination data of the task 3 in the storage space. A second processing manner is to configure the third configuration information of the task 3 and the first configuration information of the task 4 as scheduling units in the computing circuit when there are two operation paths supporting the task 3 and the task 4 in the computing circuit. After performing a data operation on source data of the task 3 to obtain the destination data, the operation path of the task 3 forwards the destination data of the task 3 to the scheduling unit. The scheduling unit performs a data operation corresponding to the operation type characterized by the second configuration information of the one task 4 on the destination data of the task 3. In this case, a data storage operation for the task 3 and a data reading operation for the task 4 may be omitted, which saves the data reading resources and the data storage resources, thereby improving the overall resource utilization and the computational efficiency of the computing apparatus.

According to the implementation manner of coupling the reading circuit and the storage circuit to the memory in this embodiment, interconnection between the reading circuit and the storage circuit may be achieved through the memory, so that data transmission between the storage circuit and the reading circuit may be implemented. By adopting the first processing manner described above, processing for tasks having a dependency relationship or consecutive tasks may be implemented, thereby implementing more computing functions.

Applications of the computing apparatus and the computing method in the embodiments of this disclosure are further described below by using an example in which the computing apparatus includes three first registers 450, two reading circuits 410, and two storage circuits 430, and the computing circuit 420 includes the floating-point operation path and the integer operation path shown in FIG. 13, and taking processing for three tasks (a task 1, a task 2, and a task 3) as an example. It is assumed that operation types of the task 1 and the task 3 are the integer computing type, and an operation type of the task 2 is the floating-point computation type. FIG. 16 is a schematic sequence diagram according to an application embodiment of this disclosure. As shown in FIG. 16, at the task configuration stage, the task configuration information of the task 1, the task 2, and the task 3 may be sequentially configured to first registers 1, first registers 2, and first registers 3 in three first registers 450 through the configuration circuit. At the data reading stage, after the task configuration information of the task 1 is configured, one of the two reading circuits 410 starts data reading for the task 1. After the data reading for the task 1 is completed, the task configuration information of the task 2 and the task 3 is configured. In this case, data reading for the task 2 and the task 3 may be performed separately by using the two reading circuits 410. In other words, the data reading for the task 2 and the task 3 are executed simultaneously. At the data operation stage, after a part of the data of the task 1 is read, a data operation may be started immediately on source data read from the task 1 through the integer operation path. As both the task 1 and the task 3 use the integer operation path, a data operation for the task 3 needs to be started after the data operation for the task 1 is completed. After a part of the data of the task 2 is read, a data operation may be started immediately on source data read from the task 2 through the floating-point operation path. At the data storage stage: after computing result data is obtained through computing of the task 1, a storage circuit 1 in the two storage circuits 430 may immediately start data storage for the task 1; after computing result data is obtained through computing of the task 2, the other storage circuit 2 in the two storage circuits 430 may immediately start data storage for the task 2, where the task 2 and the task 3 may generate computing result data simultaneously; and after the data storage for the task 1 is completed and computing result data is obtained through computing of the task 3, the storage circuit 1 may immediately start data storage for the task 3. In this case, the data storage for the task 2 and the task 3 may be performed in parallel. Thus, time-sharing processing for different tasks is implemented at various task processing stages (including task configuration, data reading, data operations, and data storage). In this case, time-sharing multiplexing of the configuration resources, the data reading resources, the data operation resources, and the data storage resources is achieved. Thus, seamless scheduling of different tasks is implemented at various task processing stages, which can significantly reduce idle time of the configuration resources, the data reading resources, the data operation resources, and the data storage resources, thereby improving utilization of the configuration resources, the data reading resources, the data operation resources, and the data storage resources, and improving overall resource utilization and computational efficiency of the computing apparatus.

In addition, an embodiment of this disclosure further provides a chip, including the computing apparatus according to any one of the embodiments of this disclosure.

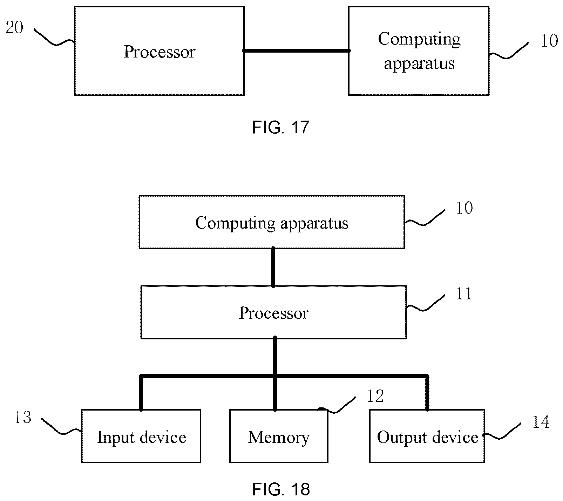

In addition, an embodiment of this disclosure further provides a computing system. FIG. 17 is a schematic diagram of a structure of a computing system according to an exemplary embodiment of this disclosure. According to some embodiments, the computing system includes a processor 20 and a computing apparatus 10 according to any embodiment of this disclosure. The processor 20 is electrically connected to the computing apparatus 10 through a bus, and is configured to send the configuration instructions corresponding to the tasks to the computing apparatus 10.

It should be noted that the computing apparatus and the computing method in the embodiments of this disclosure correspond to each other in technical implementation and in implementation manners. For content of the embodiments, reference may be made to each other. The computing apparatus and the computing method in the embodiments of this disclosure also correspond to each other in technical effects, and reference may be made to each other for relevant records of corresponding technical effects. To reduce redundancy, details are not described herein.

### Exemplary electronic device

In addition, an embodiment of this disclosure further provides an electronic device, which includes a processor, a memory, and a computing apparatus.

The memory is configured to store processor-executable instructions.

The processor is configured to read the executable instructions from the memory, and execute the instructions to control the computing apparatus to implement the computing method according to any one of the embodiments of this disclosure.

FIG. 18 is a diagram of a structure of an electronic device according to an embodiment of this disclosure. The electronic device includes a computing apparatus 10, at least one processor 11, and a memory 12.

The computing apparatus 10 may be implemented by using a structure of the computing apparatus according to any one of the embodiments of this disclosure. Details are not described herein.

The processor 11 may be a central processing unit (CPU) or another form of processing unit having a data processing capability and/or an instruction execution capability, and may control other components in the electronic device to implement desired functions.

The memory 12 may include one or more computer program products, which may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 11 may run the one or more program instructions to control the computing apparatus 10 to implement the computing method according to various embodiments of this disclosure that are described above and/or other desired functions.

In an example, the electronic device may further include an input device 13 and an output device 14. These components are connected to each other through a bus system and/or another form of connection mechanism (not shown).

The input device 13 may further include, for example, a keyboard and a mouse.

The output device 14 may output various information to the outside, and may include, for example, a display, a speaker, a printer, a communication network, and a remote output device connected to the communication network.

Certainly, for simplicity, FIG. 18 shows only some of components in the electronic device that are related to this disclosure, and components such as a bus and an input/output interface are omitted. In addition, according to specific application situations, the electronic device may further include any other appropriate components.

### Exemplary computer program product and computer readable storage medium

In addition to the foregoing method and device, embodiments of this disclosure may also provide a computer program product, which includes computer program instructions. When the computer program instructions are run by a processor, the processor is enabled to perform the steps, of the computing method according to the embodiments of this disclosure, that are described in the "Exemplary method" section described above.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the computing method according to the embodiments of this disclosure, that are described in the "Exemplary method" section described above.

The computer readable storage medium may be one readable medium or any combination of a plurality of readable media. The readable medium may be a readable signal medium or a readable storage medium. The readable storage medium includes, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, and effects mentioned in this disclosure are merely examples but are not for limitation, and it cannot be considered that these advantages, superiorities, and effects are necessary for each embodiment of this disclosure. In addition, specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

## Claims

1. A computing apparatus, **characterized in that** the computing apparatus comprises a reading circuit (410), a computing circuit (420), a storage circuit (430), a control circuit (440), and a plurality of first registers (450), wherein
at least one first register (450) among the plurality of first registers (450) is configured with task configuration information of tasks, and the task configuration information comprises first configuration information for reading source data, second configuration information for characterizing an operation type, and third configuration information for storing destination data; and
the control circuit (440) is configured to:
read register information respectively corresponding to the tasks one by one in a preset manner, wherein the register information is used to uniquely identify one first register (450); enable the first register (450) identified by a currently read piece of register information to output the first configuration information to the reading circuit (410); enable the first register (450) identified by the currently read piece of register information to output the second configuration information to the computing circuit (420); and enable the first register (450) identified by the currently read piece of register information to output the third configuration information to the storage circuit (430); and
control the reading circuit (410) to perform data reading in a time-sharing manner based on the first configuration information of the tasks; control the computing circuit (420) to perform data operations in a time-sharing manner based on the second configuration information of the tasks; and control the storage circuit (430) to perform data storage in a time-sharing manner based on the third configuration information of the tasks.

2. The computing apparatus according to claim 1, wherein the reading circuit (410), the computing circuit (420) and the storage circuit (430) are configured to perform corresponding data reading, data operations, and data storage in parallel under the control of the control circuit (440).

3. The computing apparatus according to any one of claims 1 and 2, wherein the control circuit (440) comprises a control unit (4402), a second register (4404), a first multiplexer, a second multiplexer, and a third multiplexer; one end of the first multiplexer is electrically connected to the plurality of first registers (450) respectively, and the other end of the first multiplexer is electrically connected to the reading circuit (410); one end of the second multiplexer is electrically connected to the plurality of first registers (450) respectively, and the other end of the second multiplexer is electrically connected to the computing circuit (420); and one end of the third multiplexer is electrically connected to the plurality of first registers (450) respectively, and the other end of the third multiplexer is electrically connected to the storage circuit (430);
the second register (4404) is configured with a register information queue, which is used to cache the register information respectively corresponding to the tasks; and
the control unit (4402) is configured to: poll to read one piece of register information in the register information queue in a first-in-first-out manner; trigger the first multiplexer to establish a data transmission path between the first register (450) identified by the currently read piece of register information and the reading circuit (410); trigger the second multiplexer to establish a data transmission path between the first register (450) identified by the currently read piece of register information and the computing circuit (420); trigger the third multiplexer to establish a data transmission path between the first register (450) identified by the currently read piece of register information and the storage circuit (430); and in response to receiving a reading complete message sent from the reading circuit (410), perform the operation of polling to read one piece of register information in the register information queue.

4. The computing apparatus according to any one of claims 1 and 2, wherein the control circuit (440) comprises a plurality of second registers (4422), a first multiplexer, a second multiplexer, a third multiplexer, a first counter (4432), a second counter (4434), and a third counter (4436); one end of the first multiplexer is electrically connected to the plurality of first registers (450) respectively, and the other end of the first multiplexer is electrically connected to the reading circuit (410); one end of the second multiplexer is electrically connected to the plurality of first registers (450) respectively, and the other end of the second multiplexer is electrically connected to the computing circuit (420); and one end of the third multiplexer is electrically connected to the plurality of first registers (450) respectively, and the other end of the third multiplexer is electrically connected to the storage circuit (430);
the first counter (4432) is electrically connected to the first multiplexer, the second counter (4434) is electrically connected to the second multiplexer, and the third counter (4436) is electrically connected to the third multiplexer;
at least one of the plurality of second registers (4422) is configured to form a register information queue, which is used to cache the register information respectively corresponding to the tasks, and one of the plurality of second registers (4422) is configured to cache the register information corresponding to one task;
the first counter (4432) is configured to: in response to receiving a reading complete message sent from the reading circuit (410), update a count value and trigger the first multiplexer to establish a data transmission path between a next first register (450) identified by the register information cached by a next second register (4404) in the register information queue and the reading circuit (410), wherein the next second register (4404) refers to a second register (4404) in the register information queue that is configured to cache the register information corresponding to a next task;
the second counter (4434) is configured to: in response to receiving a data operation complete message sent from the computing circuit (420), update a count value and trigger the second multiplexer to establish a data transmission path between a next first register (450) identified by the register information cached by the next second register (4404) and the computing circuit (420); and
the third counter (4436) is configured to: in response to receiving a storage complete message sent from the storage circuit (430), update a count value and trigger the third multiplexer to establish a data transmission path between a next first register (450) identified by the register information cached by the next second register (4404) and the storage circuit (430).

5. The computing apparatus according to any one of claims 3 and 4, wherein the first register (450) comprises a first configuration register (4502), a second configuration register (4504), and a third configuration register (4506); and the first configuration register (4502), the second configuration register (4504), and the third configuration register (4506) in the first register (450) are configured with the first configuration information, the second configuration information, and the third configuration information of a same task, respectively;
one end of the first multiplexer is electrically connected to first configuration registers (4502) in the plurality of first registers (450), respectively;
one end of the second multiplexer is electrically connected to second configuration registers (4504) in the plurality of first registers (450), respectively; and
one end of the third multiplexer is electrically connected to third configuration registers (4506) in the plurality of first registers (450), respectively.

6. The computing apparatus according to any one of claims 1 to 5, wherein the first configuration information comprises at least one piece of source data addressing information, which comprises a start address, a dimension storage order, dimension sizes, and magnitudes and strides of dimensions; and
the reading circuit (410) comprises:
a source address generation unit (4102), configured to: in response to receiving the first configuration information of a task, generate a first storage address of the source data in a memory based on the first configuration information of that task; and
a reading unit (4104), configured to: perform data reading based on the first storage address; send the read source data to the computing circuit (420); and send a reading complete message to the control circuit (440) after the source data is sent, so that in response to the reading complete message, the control circuit (440) polls to read a next piece of register information, and enables the first register (450) identified by the next piece of register information to output the first configuration information of a next task to the reading circuit (410).

7. The computing apparatus according to any one of claims 1 to 5, wherein the third configuration information comprises destination data addressing information, which comprises a start address, a dimension storage order, dimension sizes, and magnitudes and strides of dimensions; and
the storage circuit (430) comprises:
a destination address generation unit (4302), configured to: in response to receiving the third configuration information corresponding to the task, generate a second storage address in a memory for the destination data based on the third configuration information of the task; and
a write unit (4304), configured to: write the destination data obtained by performing a data operation by the computing circuit (420) into the second storage address; and send a storage complete message to the control circuit (440) after the destination data is written, so that in response to the storage complete message, the control circuit (440) enables the first register (450) identified by a next piece of register information to output the third configuration information of a next task to the storage circuit (430).

8. The computing apparatus according to any one of claims 1 to 5, wherein the computing circuit (420) comprises a scheduling unit (4202) and a plurality of operation paths (4204), and one of the operation paths (4204) supports one operation type and comprises at least one computing unit;
the scheduling unit (4202) is configured to: in response to receiving the second configuration information and source data corresponding to one of the tasks, determine whether there is currently an available target operation path (4204), wherein the target operation path (4204) refers to an operation path (4204) among the plurality of operation paths (4204) that supports a target operation type, and the target operation type refers to an operation type **characterized by** the second configuration information of the one task; and in response to that there is currently an available target operation path (4204), call a target operation path (4204) to perform a data operation corresponding to the target operation type on the source data of the task, and send an operation complete message to the control circuit (440) after the data operation is completed, so that in response to the operation complete message, the control circuit (440) enables the first register (450) identified by a next piece of register information in the register information queue to output the second configuration information of a next task to the computing circuit (420); and
the target operation path (4204) is configured to: according to the calling of the scheduling unit (4202), perform a data operation corresponding to the target operation type on the source data corresponding to the task by using at least one computing unit on the target operation path (4204); and in response to completion of the data operation, send the destination data obtained through the data operation to the storage circuit (430).

9. The computing apparatus according to any one of claims 1 to 8, wherein the computing apparatus comprises a plurality of reading circuits (410) and a plurality of storage circuits (430), the plurality of reading circuits (410) are electrically connected to the computing circuit (420) and the control circuit (440) respectively, and the plurality of storage circuits (430) are electrically connected to the computing circuit (420) and the control circuit (440) respectively; and
the control circuit (440) is further configured to:
cache the register information respectively corresponding to the tasks in a first-in-first-out manner through the register information queue;
poll to read one piece of register information in the register information queue in a first-in-first-out manner; enable the first register (450) identified by the currently read piece of register information to output the first configuration information to an available reading circuit (410); enable the first register (450) identified by the currently read piece of register information to output the second configuration information to the computing circuit (420); and enable the first register (450) identified by the currently read piece of register information to output the third configuration information to an available storage circuit (430); and
control the reading circuits (410) to perform data reading in a time-sharing manner based on the first configuration information of the tasks; control the computing circuit (420) to perform data operations in a time-sharing manner based on the second configuration information of the tasks; and control the storage circuits (430) to perform data storage in a time-sharing manner based on the third configuration information of the tasks, wherein
the available reading circuit (410) refers to a reading circuit (410) that currently does not perform a data reading operation, and the available storage circuit (430) refers to a storage circuit (430) that currently does not perform a data storage operation.

10. The computing apparatus according to any one of claims 1 to 9, further comprising:
a configuration circuit, configured to: execute configuration instructions corresponding to the tasks in a time-sharing manner, to sequentially write the task configuration information in the configuration instructions corresponding to the tasks into one available first register (450) among the plurality of first registers (450), correspondingly; and write the register information of the available first register (450) into the register information queue in the control circuit (440) in a first-in-first-out manner, wherein the available first register (450) refers to the first register (450) among the plurality of first registers (450) that currently has no task configuration information configured.

11. The computing apparatus according to any one of claims 1 to 10, further comprising:
a memory (470), coupled to the reading circuit (410) and the storage circuit (430) respectively for storing the source data and the destination data.

12. A chip, **characterized in that** the chip comprises the computing apparatus according to any one of claims 1 to 11.

13. A computing system, **characterized in that** the computer system comprises a processor and the computing apparatus according to any one of claims 1 to 11, wherein the processor is electrically connected to the computing apparatus through a bus; and
the processor is configured to send configuration instructions corresponding to tasks to the computing apparatus.

14. A computing method, **characterized in that** the computer method comprises:
reading (110) register information corresponding to tasks one by one in a preset manner, wherein the register information is used to uniquely identify one first register of a plurality of first registers; at least one first register among the plurality of first registers is configured with task configuration information of the tasks, and the task configuration information comprises first configuration information for reading source data, second configuration information for characterizing an operation type, and third configuration information for storing destination data;
enabling (120) the first register identified by a currently read piece of register information to output the first configuration information to the reading circuit; enabling the first register identified by the currently read piece of register information to output the second configuration information to the computing circuit; and enabling the first register identified by the currently read piece of register information to output the third configuration information to the storage circuit; and
controlling (130) the reading circuit to perform data reading in a time-sharing manner based on the first configuration information of the tasks; controlling the computing circuit to perform data operations based on the second configuration information of the tasks; and controlling the storage circuit to perform data storage in a time-sharing manner based on the third configuration information of the tasks.

15. The method according to claim 14, further comprising:
controlling (210) the reading circuit, the computing circuit, and the storage circuit to perform corresponding data reading, data operations, and data storage in parallel.

16. The method according to any one of claims 14 and 15, further comprising:
executing (310) configuration instructions corresponding to the tasks in a time-sharing manner, to sequentially write the task configuration information in the configuration instructions corresponding to the tasks into one available first register among the plurality of first registers, correspondingly; and writing the register information of the one available first register into a register information queue in a first-in-first-out manner, wherein the available first register refers to a first register among the plurality of first registers that currently has no task configuration information configured, and the register information queue is used to cache the register information respectively corresponding to the tasks; and
the reading register information corresponding to tasks one by one in a preset manner comprises:
polling (110) to read one piece of register information in the register information queue in a first-in-first-out manner.

17. A computer readable storage medium, wherein the storage medium stores a computer program, and when executed by a processor, cause the processor to implement the computing method according to any one of claims 14 to 16.

18. An electronic device, **characterized in that** the electronic device comprises a processor (11), a memory, and a computing apparatus (10), wherein
the memory (12) is configured to store processor-executable instructions; and
the processor (11) is configured to read the executable instructions from the memory (12), and execute the instructions to control the computing apparatus to implement the computing method according to any one of claims 14 to 16.
